# EUROPÄISCHE PATENTSCHRIFT

(11) **EP 3 030 470 B1**
(45) Veröffentlichungstag und Bekanntmachung des Hinweises auf die Patenterteilung: **06.03.2019**
(21) Anmeldenummer: 14747671.7
(22) Anmeldetag: 06.08.2014
(51) Int. Cl.: B61G 5/10, B60D 1/00

(54) **ELEKTROKONTAKTKUPPLUNG FÜR EIN SPURGEFÜHRTES FAHRZEUG**
ELECTRICAL CONTACT COUPLING FOR A RAILBORNE VEHICLE
ACCOUPLEMENT À CONTACTS ÉLECTRIQUES POUR VÉHICULE GUIDÉ SUR RAILS

(30) Priorität: 07.08.2013 DE 102013108515; 29.07.2014 DE 102014110676
(43) Veröffentlichungstag der Anmeldung: 15.06.2016
(73) Patentinhaber: Voith Patent GmbH, 89522 Heidenheim (DE)
(72) Erfinder: ENDE, Sascha, 37632 Eschershausen (DE); HEINISCH, Andreas, verstroben (DE)
(74) Vertreter: Rupprecht, Kay
(86) Internationale Anmeldenummer: PCT/EP2014/066896
(87) Internationale Veröffentlichungsnummer: WO 2015/018862

(56) Entgegenhaltungen:
- EP-A1- 1 826 093
- EP-A1- 2 431 201
- CH-A- 424 906
- US-A- 3 678 442

## Beschreibung

Die Erfindung betrifft eine Elektrokontaktkupplung für ein spurgeführtes Fahrzeug, insbesondere Schienenfahrzeug.

Eine solche Elektrokontaktkupplung ist z.B. aus dem Dokument US-A1-3 678 442 bekannt.

In der Schienenfahrzeugtechnik werden zur Übermittlung von Steuersignalen und zur Leistungsübertragung zwischen zwei benachbarten Wagenkästen eines mehrgliedrigen Fahrzeuges in der Regel Elektrokontaktkupplungen eingesetzt. Die Anordnung, Steuerung und Größe der verwendeten Elektrokontaktkupplungen sind von dem zur Verfügung stehenden Bauraum im Fahrzeug und von der Anzahl der zu übermittelnden Signale sowie den Anforderungen des Wagonbauers bzw. des Bahnbetreibers abhängig.
In der Regel sind Elektrokontaktkupplungen derart ausgeführt, dass das Kuppeln und Entkuppeln zweier Elektrokontaktkupplungen automatisch erfolgen kann. Dabei werden die an den miteinander zu kuppelnden Fahrzeugen oder Wagenkästen angeordneten Elektrokontaktkupplungen mit Hilfe von Zentriereinrichtungen präzise zusammengeführt und anschließend mit an der Stirnseite der Elektrokontaktkupplungen Dichtungsflächen so zusammengepresst, dass ein zuverlässige Abdichtung gegenüber der Umwelt erreicht wird. Im ungekuppelten Zustand deckt üblicherweise eine Schutzklappe die Stirnseite der Elektrokontaktkupplung ab, um die Kupplungselemente oder gegebenenfalls unter Spannung stehende Kontaktelemente der Elektrokontaktkupplung gegen Berührung und Verschmutzung zu schützen.

Üblicherweise befindet sich die Elektrokontaktkupplung an der Oberseite oder seitlich des Kupplungskopfes einer mechanischen Kupplung und besteht aus einem Gehäuse mit Klappe, einem Kontaktträger mit vorgesetzten Kontakten (Stiftkontakten) zur Übertragung von elektrischen Signalen.

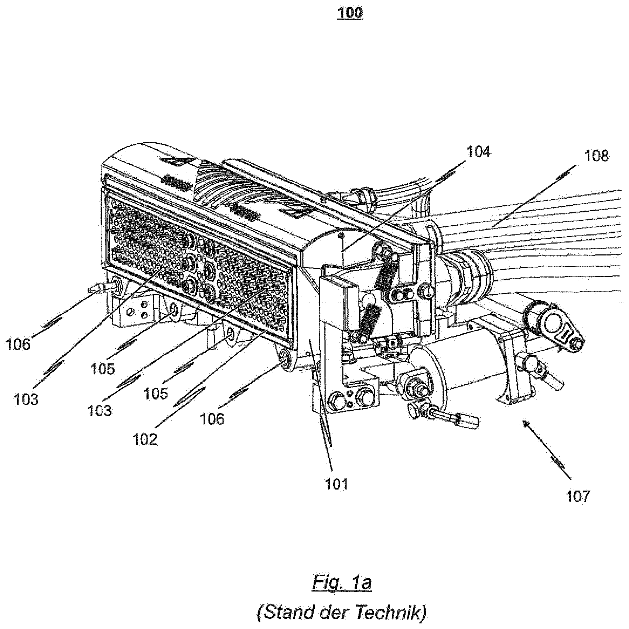

In diesem Zusammenhang wird auf die Darstellung in den Figuren 1a bis 1c verwiesen, wo als Beispiel eine aus dem Stand der Technik bekannte Elektrokontaktkupplung 100 dargestellt ist, und zwar in ihrem geöffneten Zustand, so dass der Kontaktträger 102 mit den Stiftkontakten 103 freiliegt.

Das Gehäuse 101 der Elektrokontaktkupplung 100 hat einen rechteckigen Querschnitt, wobei sich auf der dem Kupplungskopf zugewandten Außenseite Führungen 105 und frontseitige Zentrierelemente 106 befinden. Die Vorderseite des Gehäuses 101 der Elektrokontaktkupplung 100 ist mit dem Kontaktträger 102 dicht verschlossen. Der Kontaktträger 102 ist nach vorn umschlossen von einer Profildichtung. Im Kontaktträger 102 sind Bohrungen angeordnet, in denen Anschlussbolzen sitzen, wobei in die Anschlussbolzen vorderseitig die Stiftkontakte 103 geschraubt sind. Die Rückseite des Gehäuses 101 ist mit einem Deckel dicht verschlossen. Im Deckel befinden sich die Kabelverschraubungen und die Antriebslasche.

Die Klappe 104 der Elektrokontaktkupplung 100, mit welcher bedarfsweise die Stiftkontakte 103 auf dem Kontaktträger 102 geschützt werden können, ist im vorderen Bereich des Gehäuses 101 der Elektrokontaktkupplung 100 schwenkbar gelagert angeordnet. Die Klappe 104 schützt in ungekuppelter Stellung die Kontakte 103 vor Verschmutzung, Wasser und mechanischen Beschädigungen und verhindert ein unbeabsichtigtes Berühren durch Personen.

Um die Elektrokontaktkupplungen 100 zweier benachbart zueinander angeordneter Wagenkästen bzw. Fahrzeuge zu kuppeln, werden die zu kuppelnden Elektrokontaktkupplungen 100 relativ zu der mechanischen Kupplung nach vorne in die gemeinsame Kuppelebene verschoben. Die Zentrierelemente 106 der sich gegenüberliegenden Gehäuse 101 der Elektrokontaktkupplungen 100 gleiten ineinander und richten die Gehäuse 101 zueinander aus. Dadurch treffen die entsprechenden Kontakte 103 der Elektrokontaktkupplungen 100 passgenau aufeinander und die Dichtungsrahmen werden gegeneinander gepresst.

Beim Entkuppeln werden die Kontakte 103 der Elektrokontaktkupplungen 100 wieder getrennt, und zwar indem die Elektrokontaktkupplungen 100 nach hinten aus der Kuppelebene heraus verschoben werden.

Üblicherweise ist jede Elektrokontaktkupplung mit einer entsprechenden Mechanik versehen, damit die Klappe beim Kuppeln und Entkuppeln automatisch geöffnet bzw. geschlossen wird.

Beispielsweise ist aus der Druckschrift EP 0 982 215 B1 eine Elektrokontaktkupplung für automatische Mittelpufferkupplungen bekannt, bei der eine mechanische Mittelpufferkupplung vorgesehen ist, an der die Elektrokontaktkupplung längsverschiebbar gehalten wird. Die aus diesem Stand der Technik bekannte Elektrokontaktkupplung weist zumindest eine über eine Anschlussleitung angeschlossene Steckverbindung auf, welche an der Kupplungstrennstelle eines jeden zu kuppelnden Fahrzeuges angeordnet ist. Um eine redundante, symmetrisch zur senkrechten Mittellängsebene der Kupplungsstange angeordnete Kontaktanordnung zu vermeiden und die Elektrokontaktkupplung insgesamt einfacher und leichter auszubilden, weist die Elektrokontaktkupplung gemäß diesem Stand der Technik ferner einen längsverschiebbaren Adapterkasten auf, der im Kupplungszustand zwischen den jeweiligen Steckverbindungen der gekuppelten Schienenfahrzeuge und im Entkupplungszustand an lediglich einer der jeweiligen Steckverbindungen angeordnet ist. Dieser Adapterkasten enthält die notwendigen elektrischen Verbindungsleitungen zum Verbinden der Anschlussleitungen der zu kuppelnden Fahrzeuge bzw. Wagenkästen.

Des Weiteren ist beispielsweise aus der Druckschrift DE 199 26 085 A1 eine Elektrokontaktkupplung für automatische Mittel- oder Mittelpufferkupplungen bekannt. Diese Elektrokontaktkupplung weist einen am Kupplungskopf der mechanischen Mittel- oder Mittelpufferkupplung befestigten und in Längsrichtung der Mittel- bzw. Mittelpufferkupplung längsverschiebbar geführten Kontaktträger mit Kontakten für elektrische Verbindungen auf. Um zu erreichen, dass die Kontakte für die elektrischen Verbindungen möglichst optimal geschützt sind, ist bei diesem Stand der Technik vorgesehen, dass der Kontaktträger auf einer hinteren, ungekuppelten Lage in eine vordere, kuppelbereite Lage verschiebbar ist, wobei der Kontaktträger in der hinteren Lage durch eine Schutzklappe abgedeckt und in der vorderen Lage bei verschwenkter Schutzklappe freigelegt ist.

Grundproblem bei den aus dem Stand der Technik bekannten und vorstehend beschriebenen Elektrokontaktkupplungen ist insbesondere der mechanische Verschleiß der strom- oder datenführenden Kabel, die mit den Elektrokontaktkupplungen zweier benachbarter Wagenkästen durchzukuppeln sind. Dadurch, dass bei den herkömmlichen Lösungen zunächst die Elektrokontaktkupplung relativ zu der mechanischen Kupplung in den kuppelbereiten Zustand verschoben werden muss, sind mechanische Beschädigungen insbesondere durch Verschleiß der außenliegenden, beim Kuppeln zur Kupplung relativ bewegenden, strom- bzw. datenführenden Kabel/Kabelbäume unvermeidbar. Darüber hinaus wird bei den herkömmlichen Lösungen eine relativ aufwendige Mechanik für den elektrischen Kupplungsvorgang benötigt, die üblicherweise außerhalb des Gehäuses der Elektrokontaktkupplung angebracht ist. Dementsprechend entsteht ferner das Problem, dass Witterungseinflüsse, wie Eis und Schnee, zum Ausfall der außenliegenden Komponenten führen können. Insbesondere kann es zum Totalausfall der außenliegenden Mechanik kommen.

Insofern können herkömmliche Elektrokontaktkupplungen nicht beliebig klein konzipiert werden.

Darüber hinaus sind bei den herkömmlichen Systemen regelmäßig Wartungen und Überprüfungen der strom- und datenführenden Kabel notwendig, um eine einwandfreie Signal- oder Datenübertragung gewährleisten zu können. Insbesondere ist es erforderlich, die Anschlüsse an die sich relativ zu dem mechanischen Kupplungskopf bewegenden Teile der Elektrokontaktkupplung regelmäßig zu kontrollieren und auszutauschen, da diese einem hohen mechanischen Verschleiß unterworfen sind.

Ausgehend von den angesprochenen Nachteilen und Problemen, die im Zusammenhang mit den herkömmlichen Elektrokontaktkupplungen stehen, liegt der vorliegenden Erfindung die Aufgabe zugrunde, eine Elektrokontaktkupplung für ein spurgeführtes Fahrzeug, insbesondere Schienenfahrzeug, dahingehend zu optimieren, dass der Wartungsaufwand im Betrieb der Elektrokontaktkupplung deutlich reduziert werden kann, bei gleichzeitiger Gewährleistung einer zuverlässigen und insbesondere störungsunempfindlichen Signal- oder Datenübertragung.

Eine weitere Aufgabe der vorliegenden Erfindung ist darin zu sehen, eine Elektrokontaktkupplung anzugeben, die insgesamt einfacher und im Vergleich zu den aus dem Stand der Technik bekannten Lösungen leichter ausgebildet ist, wobei die Elektrokontaktkupplung ferner ein geringeres Baumaß aufweist.

Diese Aufgaben werden durch den Gegenstand des unabhängigen Patentanspruches 1 gelöst. Vorteilhafte Weiterbildungen der erfindungsgemäßen Elektrokontaktkupplung sind in den abhängigen Ansprüchen angegeben.

Demgemäß wird insbesondere eine Elektrokontaktkupplung für ein spurgeführtes Fahrzeug, insbesondere Schienenfahrzeug vorgeschlagen, wobei die Elektrokontaktkupplung ein Kupplungsgehäuse mit mindestens einer stirnseitigen Gehäuseöffnung aufweist. Im Unterschied zu den aus dem Stand der Technik bekannten und eingangs beschriebenen Elektrokontaktkupplungen ist gemäß der vorliegenden Erfindung allerdings vorgesehen, dass das Kupplungsgehäuse nicht relativ zu dem Kupplungskopf einer mechanischen Kupplung verschiebbar ist; vielmehr ist vorgesehen, dass das Kupplungsgehäuse der Elektrokontaktkupplung fest (d.h. starr) mit der mechanischen Kupplung, insbesondere Mittel- oder Mittelpufferkupplung, verbunden und insbesondere nicht mehr relativ zu der mechanischen Kupplung verschiebbar ist.

Durch diese Maßnahme kann das Kupplungsgehäuse deutlich kleiner im Vergleich zu den Kupplungsgehäusen der aus dem Stand der Technik bekannten Elektrokontaktkupplungen ausgebildet werden, da es bei der erfindungsgemäßen Lösung nicht mehr notwendig ist, dass in dem Kupplungsgehäuse auch die zum Verschieben des Kupplungsgehäuses benötigte Mechanik integriert ist.

Auch wenn die erfindungsgemäße Elektrokontaktkupplung nicht mehr mit einem Kupplungsgehäuse versehen ist, welches zum Ausbilden einer elektrischen Kupplung relativ zu der mechanischen Kupplung verschoben werden muss, ist bei der erfindungsgemäßen Lösung sichergestellt, dass die elektrischen Kontakte der Elektrokontaktkupplung erst dann gekuppelt werden, wenn eine starre und weitgehend spielfreie Kupplungsverbindung zwischen den Kupplungsköpfen der mechanischen Kupplungen zweier benachbarter Wagenkästen vorliegt. Im Einzelnen ist bei der erfindungsgemäßen Elektrokontaktkupplung hierzu vorgesehen, dass in dem Kupplungsgehäuse ein erster Kontaktträger mit mindestens einem und vorzugsweise einer Vielzahl von insbesondere nebeneinander angeordneten elektrischen Kontakten angeordnet ist. Des Weiteren ist ein vorzugsweise plattenförmiger Kontaktierungsträger vorgesehen, welcher mit mindestens einer und vorzugsweise einer Vielzahl von insbesondere nebeneinander ausgebildeten und sich in Längsrichtung des Kontaktierungsträgers erstreckenden Kontaktzungen versehen ist. Erfindungsgemäß ist dabei vorgesehen, dass der Kontaktierungsträger relativ zu dem Kupplungsgehäuse in der Längsrichtung des Kupplungsgehäuses von einer ersten Position, in welcher der Kontaktierungsträger mit der mindestens einen Kontaktzunge vollständig in dem Kupplungsgehäuse aufgenommen ist, in eine zweite Position und umgekehrt verschiebbar ist, wobei in der zweiten Position zumindest der stirnseitige Endbereich des Kontaktierungsträgers aus der Gehäuseöffnung heraussteht zum Ausbilden eines elektrischen Kontaktes zwischen der mindestens einen Kontaktzunge und mindestens einem elektrischen Kontakt einer vorzugsweise baugleich zur Elektrokontaktkupplungen ausgebildeten Gegenkupplung.

Die mit der erfindungsgemäßen Elektrokontaktkupplung erzielbaren Vorteile liegen auf der Hand: Besonders vorteilhaft ist, dass die erfindungsgemäße Elektrokontaktkupplung keine Relativbewegung zu der zugeordneten mechanischen Kupplung machen muss, um mit einer Gegenkupplung eines benachbarten Wagenkastens bzw. Fahrzeuges gekuppelt zu werden. Vielmehr wird bei der erfindungsgemäßen Lösung lediglich der vorzugsweise plattenförmige Kontaktierungsträger relativ zu dem Kupplungsgehäuse der Elektrokontaktkupplung von seiner ersten Position in seine zweite Position verschoben, in welcher die entsprechenden Kontaktzunge bzw. -zungen des Kontaktierungsträgers aus der stirnseitigen Gehäuseöffnung des Kupplungsgehäuses hervorstehen und einen elektrischen Kontakt mit den Kontakten einer Gegenkupplung ausbilden können. Auf diese Weise ist es nicht mehr erforderlich, dass die strom- oder datenführenden Kabel beim Kuppeln der Elektrokontaktkupplungen relativ zu der Kupplung bewegt werden, so dass der mechanische Verschleiß dieser Kabel erheblich reduziert wird.

Zusätzlich hierzu kann auf die gesamte Mechanik zum Verschieben des Kupplungsgehäuses der Elektrokontaktkupplung verzichtet werden, infolgedessen der Aufbau der Elektrokontaktkupplung wesentlich vereinfacht ist und insbesondere deutlich Gewicht eingespart werden kann. Darüber hinaus ist als zusätzlicher Vorteil zu nennen, dass die Abmessungen des Kupplungsgehäuses der erfindungsgemäßen Elektrokontaktkupplungen im Vergleich zu den Abmessungen der Kupplungsgehäuse der herkömmlichen Elektrokontaktkupplungen deutlich reduziert werden können.

Gemäß einer bevorzugten Realisierung der erfindungsgemäßen Elektrokontaktkupplung ist vorgesehen, dass der erste Kontaktträger als aufnehmendes Teil ausgeführt und ausgebildet ist, um zumindest den stirnseitigen Endbereich eines Kontaktierungsträgers einer vorzugsweise baugleich zur Elektrokontaktkupplung ausgeführten Gegenkupplung aufzunehmen, wenn die Elektrokontaktkupplung mit der Gegenkupplung verbunden (gekuppelt) ist und sich der Kontaktierungsträger der Gegenkupplung in seiner zweiten Position befindet. In diesem Zusammenhang ist es insbesondere von Vorteil, wenn die einzelnen in dem ersten Kontaktträger vorgesehen elektrischen Kontakte als Kontakthülsen oder ähnliche Schleif- oder Gleitkontakte ausgebildet sind, in die ein entsprechendes aufzunehmendes Teil der Gegenkupplung aufnehmbar ist, um eine elektrische Kontaktierung zu gewährleisten. Selbstverständlich kommen hier aber auch andere Ausführungsformen in Frage.

Besonders bevorzugt ist vorgesehen, dass der erste Kontaktträger lös- und austauschbar mit dem Gehäuse der Elektrokontaktkupplung verbunden ist, damit dieser mit möglichst geringem Wartungsaufwand ersetzt werden kann. Wie bereits ausgeführt, sind die elektrischen Kontakte des ersten Kontaktträgers vorzugsweise als elektrische Gleit- oder Schleifkontakte ausgebildet, wobei an diesen Kontakten die elektrischen Daten- oder Signalleitungen der Elektrokontaktkupplung anschließbar sind. Da sich der erste Kontaktträger nicht relativ zu dem Gehäuse der Elektrokontaktkupplung bewegt, sind die an den Kontakten des ersten Kontaktträgers angeschlossenen elektrischen Daten- oder Signalleitungen somit auch nicht mehr einem erhöhten Verschleiß ausgesetzt.

In einer bevorzugten Realisierung der erfindungsgemäßen Lösung ist vorgesehen, dass die Elektrokontaktkupplung zusätzlich zu dem ersten Kontaktträger ferner einen zweiten in dem Kupplungsgehäuse angeordneten Kontaktträger aufweist, wobei dieser zweite Kontaktträger ebenfalls mit mindestens einem und vorzugsweise einer Vielzahl von insbesondere nebeneinander angeordneten elektrischen Kontakten versehen ist. Der zweite Kontaktträger ist vorzugsweise fest mit dem Gehäuse der Elektrokontaktkupplung verbunden, wobei es sich auch hier erneut anbietet, die Verbindung zwischen dem zweiten Kontaktträger und dem Gehäuse der Elektrokontaktkupplung derart auszubilden, dass der zweite Kontaktträger mit geringem Aufwand von dem Gehäuse der Elektrokontaktkupplung gelöst und somit ausgetauscht werden kann.

Wesentlich ist allerdings, dass der zweite Kontaktträger dem Kontaktierungsträger zugeordnet ist und bei der Bewegung des Kontaktierungsträgers relativ zu dem Gehäuse der Elektrokontaktkupplung diesen führt. Im Einzelnen ist dies dadurch realisierbar, dass der Kontaktierungsträgers bei seiner Relativbewegung zu dem Kupplungsgehäuse der Elektrokontaktkupplung zumindest bereichsweise durch den zweiten Kontaktträger geführt wird. Hierbei kommt dem Kontaktierungsträger die Funktion des elektrischen Durchkontaktierens des mindestens einen elektrischen Kontakts des zweiten Kontaktträgers mit mindestens einem elektrischen Kontakt einer vorzugsweise baugleich zur Elektrokontaktkupplung ausgebildeten Gegenkupplung zu.

Alternativ hierzu kann der zweite Kontaktträger jedoch auch als Endbereich der mindestens einen Kontaktzunge ausgebildet sein. Dementsprechend ist es insbesondere vorgesehen, den mindestens einen elektrischen Kontakt des zweiten Kontaktträgers auf der Oberfläche des Kontaktierungsträgers anzubringen. Mit anderen Worten, ist die mindestens eine Kontaktzunge des Kontaktierungsträgers somit selbst als ein zweiter Kontaktträger ausgebildet. Somit werden auch die entsprechenden Signalleitungen des zweiten Kontaktträgers direkt an der mindestens einen Kontaktzunge des Kontaktierungsträgers angebracht. Wie es später näher erläutert werden wird, kann dabei insbesondere der vordere Endbereich der mindestens einen Kontaktzunge als zweiter Kontaktträger ausgebildet sein. Diesbezüglich ist es also nicht mehr nötig, ein weiteres Verschleißteil vorzusehen, welches den zweiten Kontaktträger bildet. Vielmehr kann der vordere Endbereich der mindestens einen Kontaktzunge direkt mit den Signalleitungen verbunden werden.

Wie bereits ausgeführt, übernimmt der als separates Einzelteil ausgebildete, zweite Kontaktträger in gewisser Weise eine Doppelfunktion: Zum einen trägt der zweite Kontaktträger den mindestens einen und vorzugsweise die Vielzahl der elektrischen Kontakte, die mit der Elektrokontaktkupplung durchzukuppeln sind. Zum anderen dient der zweite Kontaktträger als Führung zum Führen des Kontaktierungsträgers bei seiner Bewegung relativ zu dem Gehäuse der Elektrokontaktkupplung. Zusätzlich hierzu ist es selbstverständlich aber auch denkbar, weitere Führungselemente, insbesondere Führungsschienen in dem Gehäuse der Elektrokontaktkupplung vorzusehen, um die Relativbewegung des Kontaktierungsträgers zu führen.

Wie der erste Kontaktträger ist auch der zweite Kontaktträger vorzugsweise lös- und austauschbar mit dem Gehäuse der Elektrokontaktkupplung fest verbunden, wobei der mindestens eine elektrische Kontakt des zweiten Kontaktträgers gemäß bevorzugten Realisierungen der erfindungsgemäßen Lösung als elektrischer Gleit- oder Schleifkontakt ausgebildet ist, an dem eine elektrische Daten- oder Signalleitung der Elektrokontaktkupplung anschließbar ist. Da der zweite Kontaktträger fest mit dem Gehäuse der Elektrokontaktkupplung verbunden ist, tritt somit auch kein erhöhter mechanischer Verschleiß der an den bzw. dem entsprechenden elektrischen Kontakt des zweiten Kontaktträgers angeschlossenen Daten- bzw. Signalleitungen auf.

Um zu erreichen, dass im ungekuppelten Zustand der Elektrokontaktkupplung Feuchtigkeit, Staub oder andere Verschmutzungen nicht durch die stirnseitige Gehäuseöffnung in das Kupplungsgehäuse eindringen können, ist es von Vorteil, wenn eine entsprechende Dichtungsanordnung vorgesehen ist, die dazu ausgebildet ist, die in dem Kupplungsgehäuse vorgesehene mindestens eine stirnseitige Gehäuseöffnung insbesondere in der ersten Position des Kontaktierungsträgers zu verschließen. Denkbar hierbei ist insbesondere, dass die Dichtungsanordnung eine Lamellendichtung, Bürstendichtung und/oder mechanische Klappe aufweist; selbstverständlich ist es in diesem Zusammenhang jedoch auch möglich, mit Hilfe einer Druckdichtung die Dichtungsanordnung zu realisieren.

Im Hinblick auf den Kontaktierungsträger ist insbesondere vorgesehen, dass dieser aus einem elektrisch nicht leitenden Isoliermaterial gebildet ist bzw. einen Grundkörper aus einem elektrisch nicht leitenden Isoliermaterial aufweist. Gemäß einem Aspekt der vorliegenden Erfindung ist die bereits erwähnte mindestens eine sich in Längsrichtung des Kontaktierungsträgers erstreckende Kontaktzunge derart in dem Isoliermaterial aufgenommen, dass vorzugsweise nur die beidseitigen Endbereiche der mindestens einen Kontaktzunge zumindest bereichsweise freiliegen und entsprechende elektrische Kontaktbereiche bilden. Auf diese Weise sind die Kontaktzungen, die letztendlich zur Durchkontaktierung der miteinander elektrisch zu verbindenden Kontakte dienen, bestmöglich vor Verschleiß oder Witterungseinflüssen geschützt. Gemäß einem weiteren Aspekt der vorliegenden Erfindung ist der hintere Endbereich des Kontaktträgers, gegenüberliegend dem stirnseitigen vorderen Endbereich des Kontaktträgers, als flexible Leiterplatte ausgebildet.

Eine solche flexible Leiterplatte ist innerhalb eines geeignet wählbaren Toleranzbereichs elastisch verformbar. Darüber weist eine derartige Leiterplatte eine gute elektrische Leitfähigkeit auf.

Hierdurch kann eine Doppelkontaktierung der Kontaktzungen, die sich im Bereich der Leiterplatte befinden, durch Gleit- oder Schleifkontakte vermieden werden. Gemäß dieses vorteilhaften Aspekts der Erfindung sorgt die Ausbildung des hinteren Endbereichs des Kontaktträgers als flexible Leiterplatte nämlich dafür, dass der hintere Endbereich des Kontaktträgers vorzugsweise durch eine gewisse Vorspannung gegen elektrische Kontakte der Elektrokontaktkupplung bzw. einer baugleich zu der Elektrokontaktkupplung ausgeführten Gegenkupplung automatisch gepresst wird, wenn der hintere Endbereich des Kontaktträgers in die Nähe der elektrischen Kontakte gebracht wird.

Hierdurch kann der Verschleiß des hinteren Endbereichs des Kontaktträgers bzw. der Kontaktzungen verringert werden, da keine Doppelkontaktierung der Kontaktzungen stattfindet, sondern lediglich ein Bereich (z.B. Ober- oder Unterseite) der Leiterplatte in Kontakt mit den elektrischen Kontakten der Elektrokontaktkupplung oder einer entsprechenden Gegenkupplung tritt.

Gemäß einem weiteren Aspekt der Erfindung ist der Grundkörper des Kontaktierungsträgers bei der ersten Position des Kontaktierungsträgers derart angeordnet, dass die Kontaktzungen des Kontaktierungsträgers im vorderen und hinteren Endbereich des Kontaktierungsträgers nicht in elektrischem Kontakt mit der Elektrokontaktkupplung oder einer entsprechenden Gegenkupplung stehen. Insbesondere kann hierdurch verhindert werden, dass die Kontaktzungen im vorderen Endbereich des Kontaktierungsträgers im eingezogenen Zustand des Kontaktierungsträgers in Kontakt mit den elektrischen Kontakten der Elektrokontaktkupplung stehen, was bedeuten würde, dass diese Kontaktzungen beim Koppeln der Elektrokontaktkupplung mit einer entsprechenden Gegenkupplung doppelt so viele Zyklen wie die Kontaktzungen im hinteren Endbereich des Kontaktierungsträgers durchlaufen würden. Hierdurch würden die Kontaktzungen im vorderen Endbereich des Kontaktierungsträgers im Vergleich zu den Kontaktzungen im hinteren Endbereich des Kontaktierungsträgers doppelt so oft belastet werden. Durch eine entsprechende Wahl der Abstände wie oben beschrieben (kein Kontakt der Kontaktzungen mit elektrischen Kontakten in der ersten Position) kann diese Belastung verhindert werden. Hierdurch kann wiederum der Verschleiß reduziert werden.

Gemäß einem weiteren Aspekt der Erfindung weisen die Kontaktzungen, vorzugsweise die Kontaktzungen im vorderen Endbereich oder im hinteren Endbereich des Kontaktierungsträgers, federnde Elemente auf, um die Herstellung eines elektrischen Kontakts zwischen den Kontaktzungen und elektrischen Kontakten der Elektrokontaktkupplung bzw. einer entsprechenden Gegenkupplung zu ermöglichen.

Hierdurch kann die Herstellung eines Gleit- oder Schleifkontakts in einer planaren Ebene durch die federnden Elemente der Kontaktzungen sichergestellt werden. Dadurch, dass die federnden Elemente an den Kontaktzungen ausgebildet sind und nicht an den elektrischen Kontakten der Elektrokontaktkupplung ausgebildet sind, wird sichergestellt, dass ein Verschleiß der elektrischen Kontakte der Elektrokontaktkupplung verringert wird, und statt einem Verschleiß der elektrischen Kontakte der Elektrokontaktkupplung die entsprechenden Kontaktzungen des Kontaktierungsträgers verschleißen. Die Kontaktzungen des Kontaktierungsträgers bzw. der Kontaktierungsträger können deutlich leichter getauscht bzw. ausgewechselt werden als die elektrischen Kontakte der Elektrokontaktkupplung.

Gemäß einem weiteren Aspekt betrifft die vorliegende Erfindung einen Kupplungskopf für ein spurgeführtes Fahrzeug, insbesondere einen Kupplungskopf einer automatischen Mittel- oder Mittelpufferkupplung, wobei der Kupplungskopf dieser Mittel- oder Mittelpufferkupplung (hierin auch als "mechanische Kupplung" bezeichnet) ein Kupplungskopfgehäuse sowie eine das Kupplungskopfgehäuse stirnseitig abschließende Stirnplatte aufweist. Des Weiteren ist mindestens eine Elektrokontaktkupplung gemäß der vorliegenden Erfindung vorgesehen. Anders als bei den eingangs diskutierten und aus dem Stand der Technik bekannten Ansätze ist bei diesem Aspekt der vorliegenden Erfindung jedoch vorgesehen, dass das Kupplungsgehäuse der mindestens einen Elektrokontaktkupplung vorzugsweise derart mit dem Kupplungskopfgehäuse des Kupplungskopfes der mechanischen Kupplung fest (d.h. starr) verbunden ist, dass die Stirnfläche des Kupplungsgehäuses der Elektrokontaktkupplung in oder in unmittelbarer Nähe der vertikalen Kuppelebene des Kupplungskopfes liegt. Mit anderen Worten, ein Verschieben der Elektrokontaktkupplung relativ zu der mechanischen Kupplung zum Durchkuppeln der elektrischen Kontakte ist gemäß diesem Aspekt nicht mehr erforderlich.

Gemäß einer Weiterbildung des zuletzt genannten Aspekts der vorliegenden Erfindung ist vorgesehen, dass die Stirnplatte des Kupplungskopfgehäuses der mechanischen Kupplung zumindest bereichsweise über der Stirnseite des Kupplungskopfgehäuses hervorsteht und in den hervorstehenden Bereichen die Stirnplatte der mindestens einen an dem Kupplungskopfgehäuse der mechanischen Kupplung befestigten Elektrokontaktkupplung bildet. Hierbei ist insbesondere vorgesehen, dass in dem hervorstehenden Bereich der Stirnplatte des Kupplungskopfgehäuses mindestens eine spaltenförmige Öffnung ausgebildet ist, durch welche sich der Kontaktierungsträger zumindest bereichsweise erstrecken kann, wenn der Kontaktierungsträger von seiner ersten (zurückgezogenen) Position in seine zweite (herausstehenden) Position verschoben wird.

Gemäß einer alternativen Weiterbildung des zuletzt genannten Aspekts der vorliegenden Erfindung ist vorgesehen, dass die Elektrokontaktkupplung federnd oder schwimmend bezüglich des Kupplungskopfs der automatischen Mittel- oder Mittelpufferkupplung gelagert ist.

Hierdurch kann erreicht werden, dass Schwingbewegungen des Kupplungskopfs der automatischen Mittel- oder Mittelpufferkupplung aufgrund beispielsweise eines Kupplungsvorgangs nicht auf die Elektrokontaktkupplung übertragen werden. Durch eine derartige Übertragung könnte eine mechanische Belastung auf die Elektrokontaktkupplung, insbesondere beim Koppeln der Elektrokontaktkupplung mit einer entsprechenden Gegenkupplung ausgeübt werden, was die Elektrokontaktkupplung beschädigen könnte und zu einem höheren Verschleiß führen würde. Eine federnde oder schwimmende Lagerung der Elektrokontaktkupplung verhindert eine solche Übertragung einer (mechanischen) Schwingung und ermöglicht, dass die Elektrokontaktkupplung mit einer entsprechenden Gegenkupplung fehlerfrei kuppeln kann.

Nachfolgend werden exemplarische Ausführungsformen der erfindungsgemäßen Lösung anhand der beiliegenden Zeichnungen näher beschrieben.

Es zeigen:
- Fig. 1:: eine perspektivische Ansicht einer herkömmlichen aus dem Stand der Technik bekannten Elektrokontaktkupplung mit geöffneter Klappe;
- Fig. 2a:: eine Draufsicht auf eine erste exemplarische Ausführungsform der erfindungsgemäßen Elektrokontaktkupplung mit entfernten Kupplungsgehäusedeckel, wobei der Kontaktierungsträger der Elektrokontaktkupplung in seiner ersten Position vorliegt, in welcher der Kontaktierungsträger vollständig in dem Kupplungsgehäuse der Elektrokontaktkupplung aufgenommen ist;
- Fig. 2b:: eine Schnittansicht entlang der Linie A-A der Elektrokontaktkupplung gemäß der Darstellung in Fig. 2a;
- Fig. 3a:: eine Draufsicht auf die Elektrokontaktkupplung gemäß der ersten exemplarischen Ausführungsform der vorliegenden Erfindung mit entferntem Kupplungsgehäusedeckel, wobei sich der Kontaktierungsträger der Elektrokontaktkupplung in seiner zweiten Position befindet, in welcher zumindest der stirnseitige Endbereich des Kontaktierungsträgers aus der Gehäuseöffnung des Kupplungsgehäuses heraussteht;
- Fig. 3b:: eine Schnittansicht entlang der Linie A-A in Fig. 3a;
- Fig. 4:: eine Schnittansicht entlang der Line B-B in Fig. 3a;
- Fig. 5a:: eine perspektivische Ansicht der ersten exemplarischen Ausführungsform der erfindungsgemäßen Elektrokontaktkupplung in einem Zustand, in welchem die Elektrokontaktkupplung mit einer baugleich zu der Elektrokontaktkupplung ausgeführten Gegenkupplung gekuppelt ist;
- Fig. 5b:: eine Draufsicht auf die gekuppelten Elektrokontaktkupplungen gemäß Fig. 5a;
- Fig. 6a:: eine Draufsicht auf eine zweite exemplarische Ausführungsform der erfindungsgemäßen Elektrokontaktkupplung mit entferntem Kupplungsgehäusedeckel, wobei die Elektrokontaktkupplung mit einer baugleich hierzu ausgeführten Gegenkupplung gekuppelt ist;
- Fig. 6b:: eine Schnittansicht entlang der Linie A-A in Fig. 6a;
- Fig. 7a:: eine perspektivische Ansicht einer dritten exemplarischen Ausführungsform der erfindungsgemäßen Elektrokontaktkupplung mit Kupplungsgehäusedeckel, wobei die Elektrokontaktkupplung mit einer baugleich hierzu ausgeführten Gegenkupplung gekuppelt ist;
- Fig. 7b:: eine Draufsicht auf die dritte exemplarische Ausführungsform der erfindungsgemäßen Elektrokontaktkupplung in einem Zustand, in welchem die Elektrokontaktkupplung mit einer baugleich hierzu ausgeführten Gegenkupplung gekuppelt ist;
- Fig. 7c:: eine perspektivische Ansicht der dritten exemplarischen Ausführungsform der erfindungsgemäßen Elektrokontaktkupplung mit entferntem Kupplungsgehäusedeckel, wobei die Elektrokontaktkupplung mit einer baugleich ausgeführten Gegenkupplung gekuppelt ist;
- Fig. 7d:: eine Draufsicht auf die Elektrokontaktkupplung gemäß der dritten exemplarischen Ausführungsform der vorliegenden Erfindung, wobei die Elektrokontaktkupplung mit einer baugleich ausgeführten Gegenkupplung gekuppelt ist;
- Fig. 8:: eine perspektivische Ansicht auf eine exemplarische Ausführungsform des ersten oder zweiten Kontaktträgers der erfindungsgemäßen Elektrokontaktkupplung;
- Fig. 9a:: eine perspektivische Ansicht einer exemplarischen Ausführungsform des plattenförmigen Kontaktierungsträgers der erfindungsgemäßen Elektrokontaktkupplung;
- Fig. 9b:: eine Draufsicht auf die exemplarische Ausführungsform des plattenförmigen Kontaktierungsträgers gemäß Fig. 9a;
- Fig. 9c:: eine Schnittansicht entlang der Linie A-A in Fig. 9b;
- Fig. 10a:: eine Draufsicht auf eine vierte exemplarischen Ausführungsform der erfindungsgemäßen Elektrokontaktkupplung ohne Kupplungsgehäusedeckel;
- Fig. 10b:: eine perspektivische Ansicht auf die vierte exemplarische Ausführungsform der erfindungsgemäßen Elektrokontaktkupplung, gemäß Fig. 10a, in einem Zustand, in welchem die Elektrokontaktkupplung mit einer baugleich hierzu ausgeführten Gegenkupplung gekuppelt ist;
- Fig. 10c:: eine Draufsicht auf die vierte exemplarische Ausführungsform der erfindungsgemäßen Elektrokontaktkupplung, gemäß Fig. 10a, mit entferntem Kupplungsgehäusedeckel, wobei die Elektrokontaktkupplung mit einer baugleich ausgeführten Gegenkupplung gekuppelt ist;
- Fig. 11a:: eine perspektivische Ansicht einer zweiten exemplarischen Ausführungsform des plattenförmigen Kontaktierungsträgers der erfindungsgemäßen Elektrokontaktkupplung;
- Fig. 11b:: eine Draufsicht auf die exemplarische Ausführungsform des plattenförmigen Kontaktierungsträgers gemäß Fig. 11a;
- Fig. 12a:: eine perspektivische Ansicht auf einen Kupplungskopf einer (mechanischen) Mittel- bzw. Mittelpufferkupplung eines spurgeführten Fahrzeugs mit einer Elektrokontaktkupplung gemäß einer exemplarischen Ausführungsform der vorliegenden Erfindung, wobei sich der Kontaktierungsträger der Elektrokontaktkupplung in seiner ersten Position befindet, in welcher der Kontaktierungsträger vollständig in dem Kupplungsgehäuse der Elektrokontaktkupplung aufgenommen ist;
- Fig. 12b:: eine perspektivische Ansicht auf den Kupplungskopf gemäß Fig. 12a, wobei sich jedoch der Kontaktierungsträger der exemplarischen Ausführungsform der erfindungsgemäßen Elektrokontaktkupplung hier in seiner zweiten Position befindet, in welcher zumindest der stirnseitige Endbereich des Kontaktierungsträgers aus der Gehäuseöffnung des Kupplungsgehäuses der Elektrokontaktkupplung heraussteht;
- Fig. 13:: eine perspektivische Ansicht auf den Kupplungskopf gemäß Fig. 12b in einem Zustand, in welchem der Kupplungskopf mechanisch mit einem baugleich ausgeführten Gegenkupplungskopf und die Elektrokontaktkupplung mit einer baugleich ausgeführten Gegenkupplung verbunden ist;
- Fig. 14:: eine perspektivische Ansicht eines (mechanischen) Kupplungskopfes einer Mittel- bzw. Mittelpufferkupplung mit einer zur Befestigung einer exemplarischen Ausführungsform der erfindungsgemäßen Elektrokontaktkupplung ausgebildeten Stirnplatte; und
- Fig. 15:: eine perspektivische Ansicht des (mechanischen) Kupplungskopfes gemäß Fig. 14 mit einer mit dem (mechanischen) Kupplungskopf verbundenen Elektrokontaktkupplung gemäß einer exemplarischen Ausführungsform der vorliegenden Erfindung.
- Fig. 16:: eine Seitenansicht auf eine Gehäusestirnfläche einer Elektrokontaktkupplung gemäß einer exemplarischen Ausführungsform der vorliegenden Erfindung.
- Fig. 17:: eine Schnittansicht einer Elektrokontaktkupplung gemäß einer exemplarischen Ausführungsform der vorliegenden Erfindung.
- Fig. 18:: eine Schnittansicht einer Elektrokontaktkupplung gemäß einer exemplarischen Ausführungsform der vorliegenden Erfindung.

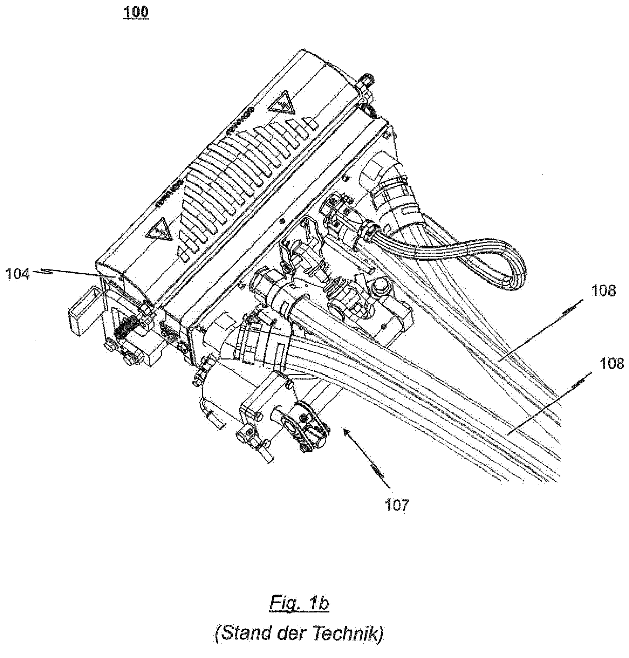

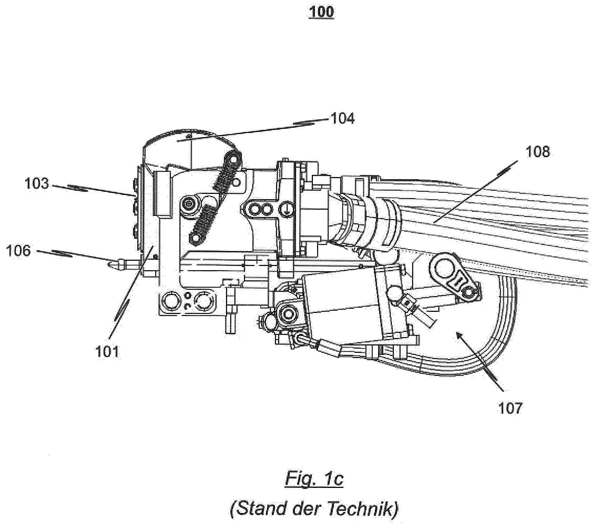

In Fig. 1 ist in einer perspektivischen Ansicht eine herkömmliche aus der Schienenfahrzeugtechnik allgemein bekannte Elektrokontaktkupplung 100 dargestellt. Die Elektrokontaktkupplung 100 ist ausgebildet, um an der Oberseite oder seitlich eines mechanischen Kupplungskopfes einer Mittel- oder Mittelpufferkupplung angeordnet zu werden und besteht im Wesentlichen aus einem Kupplungsgehäuse 101 mit einer relativ hierzu verschwenkbaren Klappe 104. Des Weiteren ist ein parallel zur Kuppelebene angeordneter Kontaktträger 102 vorgesehen, der stirnseitig das Kupplungsgehäuse 101 schließt, und in welchem Stiftkontakte 103 eingesetzt sind, über die mit der Elektrokontaktkupplung 100 elektrische Signale oder Energie zu entsprechend komplementär ausgebildeten Kontaktträgern einer in Fig. 1 nicht dargestellten Gegenkupplung übertragbar sind.

Das Kupplungsgehäuse 101 hat einen rechteckigen Querschnitt, wobei auf der dem Kupplungsgehäuse 101 zugewandten Außenseite Führungen 105 sowie frontseitige Zentrierelemente 106 vorgesehen sind. Die Führungen 105 dienen dazu, eine Verschiebung des Kupplungsgehäuses 101 relativ zu dem Kupplungsgehäuse einer mechanischen Kupplung, insbesondere Mittel- oder Mittelpufferkupplung (nicht dargestellt) zu führen. Dies ist insofern bei der herkömmlichen, aus dem Stand der Technik bekannten Elektrokontaktkupplung 100 notwendig, inwiefern diese erst dann mit einer entsprechenden Gegenkupplung gekuppelt werden kann, wenn die Elektrokontaktkupplung 100 zuvor in die gemeinsame (vertikale) Kuppelebene verschoben wurde. Insofern muss die herkömmliche Elektrokontaktkupplung 100 mit einem entsprechenden Verschiebemechanismus 107 versehen sein, was den Aufbau der Elektrokontaktkupplung 100 insgesamt verkompliziert und insbesondere zu einer relativ großen Abmessung der Elektrokontaktkupplung 100 führt. Ein beispielhafter Verschiebemechanismus 107, welcher sich insbesondere an der Außenseite des bekannten Kupplungsgehäuses 101 befindet, ist in den Figuren 1a bis 1c dargestellt.

Darüber hinaus ist ein Nachteil der herkömmlichen und exemplarisch in Fig. 1 dargestellten Elektrokontaktkupplung 100 darin zu sehen, dass aufgrund der beim Kupplungsvorgang zwingend erforderlichen Relativbewegung des Kupplungsgehäuses 101 relativ zu der mechanischen Kupplung grundsätzlich eine Belastung der mit der Elektrokontaktkupplung 100 verbundenen Signal- bzw. Datenleitungen 108 verbunden ist, was zwangsläufig zu einem mechanischen Verschleiß dieser Signal- bzw. Datenleitungen 108 führt.

Wie es nachfolgend anhand der exemplarischen Ausführungsformen der erfindungsgemäßen Elektrokontaktkupplung näher beschrieben wird, treten diese Nachteile bei der erfindungsgemäßen Lösung nicht auf.

Im Einzelnen zeichnet sich die erfindungsgemäße Elektrokontaktkupplung dadurch aus, dass nicht vorgesehen ist, dass die Elektrokontaktkupplung oder zumindest das Kupplungsgehäuse der Elektrokontaktkupplung eine Relativbewegung zu einer mit der Elektrokontaktkupplung verbundenen mechanischen Kupplung macht, wenn die Elektrokontaktkupplung in ihren kuppelbereiten Zustand überführt ist. Vielmehr ist gemäß der Erfindung vorgesehen, dass das Kupplungsgehäuse der Elektrokontaktkupplung starr mit der entsprechenden mechanischen Kupplung verbunden bzw. verbindbar ist, wobei nur ein vorzugsweise plattenförmiger Kontaktierungsträger sich relativ zu der mechanischen Kupplung und den Kupplungsgehäuse der Elektrokontaktkupplung bewegen kann, um von einem ungekuppelten Zustand (erste Position) zu einem gekuppelten bzw. kuppelbereiten Zustand (zweite Position) überzugehen. In dem ungekuppelten Zustand befindet sich der Kontaktierungsträger in seiner ersten Position, in welcher der Kontaktierungsträger vollständig in dem Kupplungsgehäuse der Elektrokontaktkupplung aufgenommen ist. In dem gekuppelten Zustand bzw. kuppelbereiten Zustand befindet sich der Kontaktierungsträger in einer zweiten Position, in welcher zumindest ein stirnseitiger Endbereich des Kontaktierungsträgers aus dem Kupplungsgehäuse der Elektrokontaktkupplung hervorsteht und sich somit anbietet, einen elektrischen Kontakt mit einer entsprechenden Gegenkupplung auszubilden.

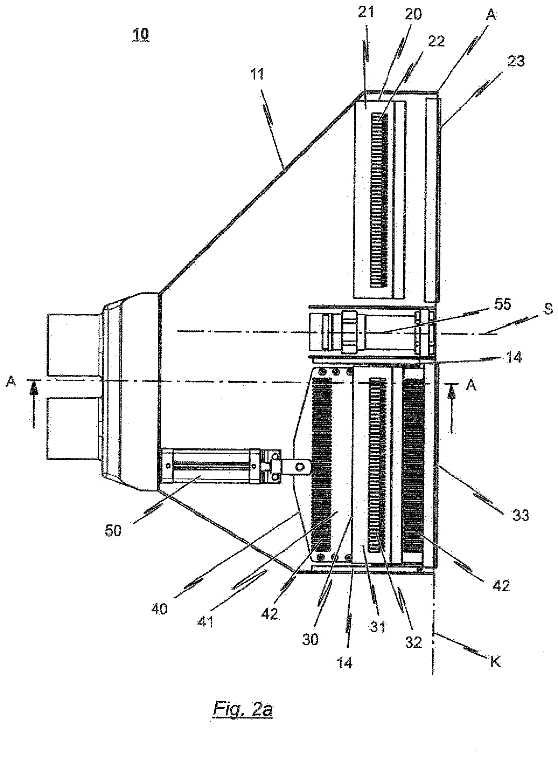

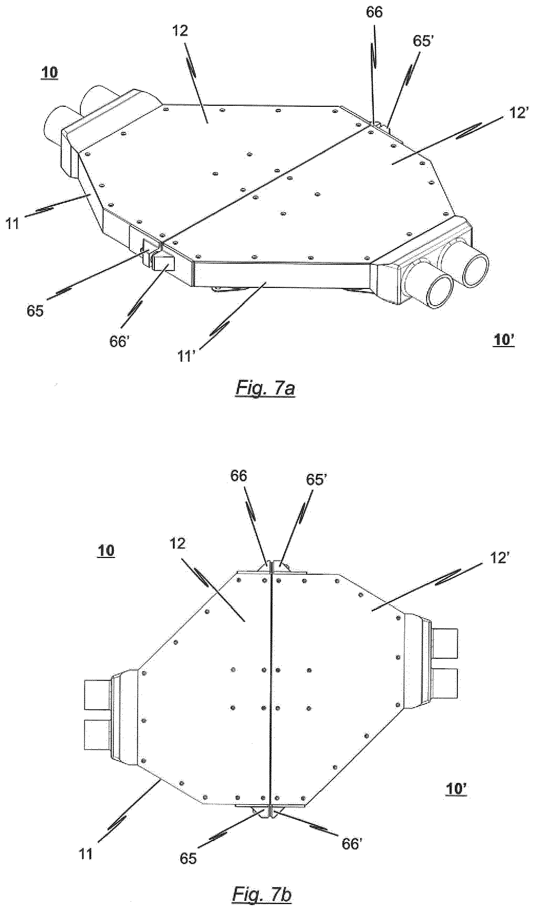

In Fig. 2a ist in einer Draufsicht eine erste exemplarische Ausführungsform der erfindungsgemäßen Elektrokontaktkupplung 10 dargestellt, wobei in dieser Darstellung der Kupplungsgehäusedeckel 12 (vgl. Fig. 7a) der Elektrokontaktkupplung 10 entfernt wurde, um eine Einsicht in den internen Aufbau der Elektrokontaktkupplung 10 zu ermöglichen.

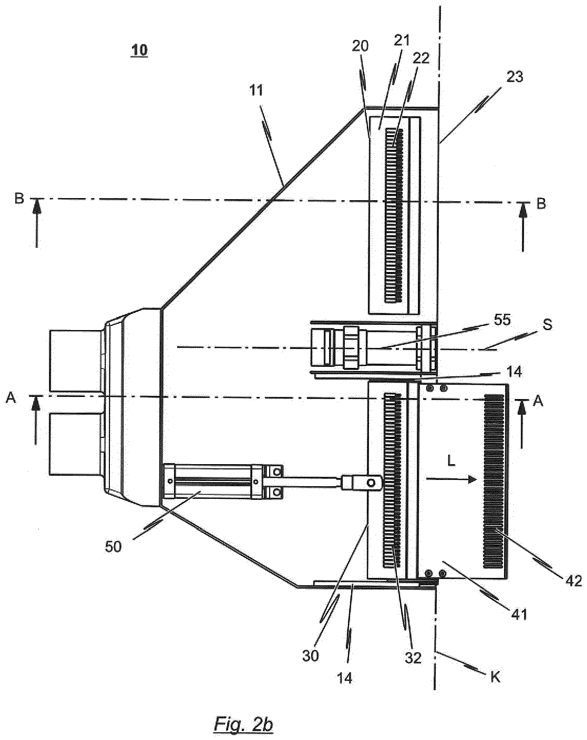

Ergänzend zu der Darstellung in Fig. 2a ist die Darstellung in Fig. 2b zu betrachten, welche eine Schnittansicht entlang der Linie A-A in Fig. 2a darstellt.

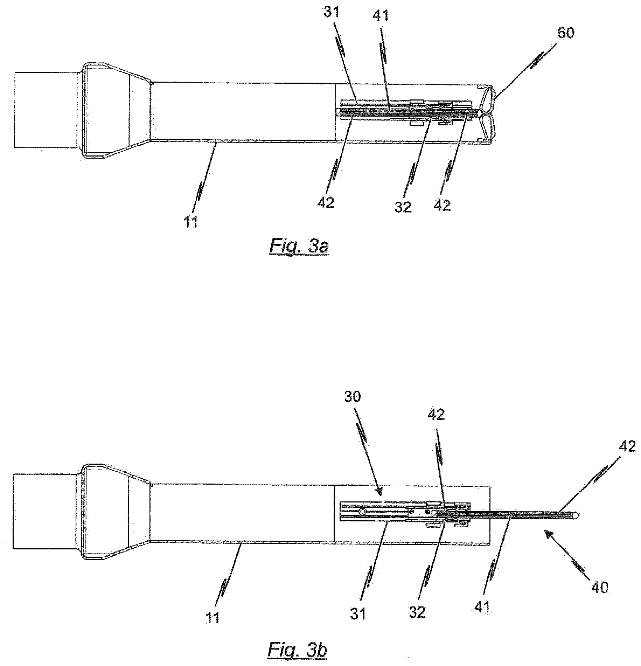

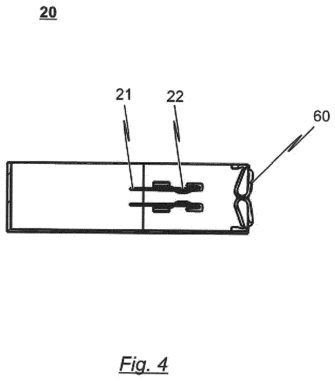

Fig. 3a ist eine Draufsicht auf die Elektrokontaktkupplung 10 gemäß der ersten exemplarischen Ausführungsform der vorliegenden Erfindung mit entferntem Kupplungsgehäusedeckel 12, wobei die Elektrokontaktkupplung 10 in einem kuppelbereiten Zustand vorliegt, in welchem sich der Kontaktierungsträger 40 der Elektrokontaktkupplung 10 in seiner zweiten Position befindet, in welcher zumindest der stirnseitige Endbereich des Kontaktierungsträgers 40 aus der Gehäuseöffnung 33 des Kupplungsgehäuses 11 heraussteht. Fig. 3b ist eine Schnittansicht entlang der Linie A-A in Fig. 3a und Fig. 4 ist eine Schnittansicht entlang der Line B-B in Fig. 3a.

Die Elektrokontaktkupplung 10 der ersten exemplarischen Ausführungsform der vorliegenden Erfindung weist ein Kupplungsgehäuse 11 auf, in welchem alle Komponenten der Elektrokontaktkupplung 10 untergebracht sind. Im Einzelnen ist in den Figuren 2a und 3a das Kupplungsgehäuse 11 der dort dargestellten ersten exemplarischen Ausführungsform der erfindungsgemäßen Elektrokontaktkupplung 10 ohne Kupplungsgehäusedeckel 12 dargestellt.

Obwohl das Kupplungsgehäuse 11 in Draufsicht nicht spiegelsymmetrisch ausgeführt ist, weist die Elektrokontaktkupplung 10 einen im Hinblick zu einer senkrechten Spiegelachse S der Gehäusestirnfläche A symmetrischen Aufbau auf.

In dem Kupplungsgehäuse 11 der Elektrokontaktkupplung 10 ist ein erster Kontaktträger 20 in einer ersten Hälfte des Kupplungsgehäuses 11 angeordnet. Ein zweiter Kontaktträger 30, der vorzugsweise baugleich zu dem ersten Kontaktträger 20 ausgeführt ist, ist in der gegenüberliegenden zweiten Kupplungsgehäusehälfte angeordnet, und zwar derart, dass beide Kontaktträger 20, 30 symmetrisch hinsichtlich der senkrechten Spiegelachse S der Gehäusestirnfläche A vorliegen.

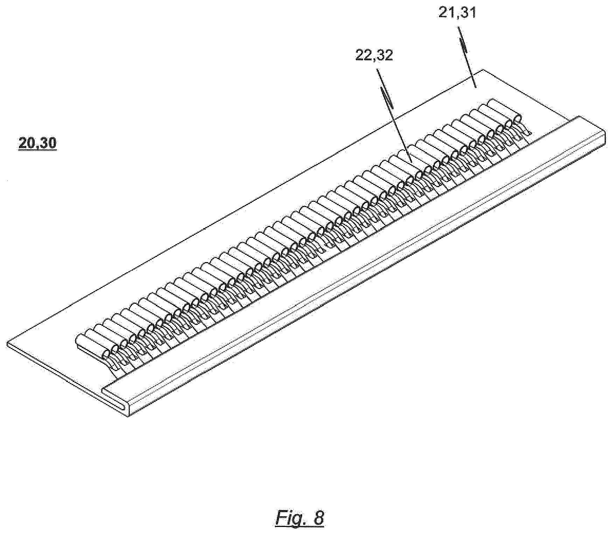

Unter dem hierin verwendeten Begriff "Kontaktträger" ist allgemein ein Bauteil zu verstehen, welches mindestens einen und vorzugsweise eine Vielzahl von elektrischen Kontakten trägt. Der genaue Aufbau der bei den hierin offenbarten exemplarischen Ausführungsformen zum Einsatz kommenden Kontaktträger 20, 30 wird nachfolgend unter Bezugnahme auf die Darstellung in Fig. 8 näher beschrieben.

Im Einzelnen ist Fig. 8 eine perspektivische Ansicht einer exemplarischen Ausführungsform eines Kontaktträgers 20, 30, welcher geeignet ist für die hierin offenbarten exemplarischen Ausführungsformen der erfindungsgemäßen Elektrokontaktkupplung 10. Gemäß der Darstellung in Fig. 8 weist die exemplarische Ausführungsform des Kontaktträgers 20, 30 ein Trägersubstrat 21, 31 auf, welches vorzugsweise aus einem elektrisch nicht leitenden Isoliermaterial gebildet ist. Auf dem Trägersubstrat 21, 31 ist mindestens eine und vorzugsweise eine Vielzahl von nebeneinander angeordneten elektrischen Kontakten 22, 32 vorgesehen. Die einzelnen nebeneinander angeordneten elektrischen Kontakten 22, 32 sind elektrisch voneinander isoliert und ausgebildet, um jeweils mit einer Daten- oder Signalleitung elektrisch verbunden zu werden. Aus Gründen der Übersichtlichkeit sind in den beiliegenden Zeichnungen diese Daten- bzw. Signalleitungen nicht eingezeichnet. Es ist jedoch selbsterklärend, dass die einzelnen Daten- bzw. Signalleitungen in üblicher Weise, beispielsweise an den jeweiligen Endbereichen der elektrischen Kontakte 22, 32 angeschlossen, insbesondere durch Lötung, werden können.

Die einzelnen elektrischen Kontakte 22, 32, die im ersten bzw. zweiten Kontaktträger 20, 30 angeordnet sind, dienen dazu, eine elektrische Verbindung mit entsprechenden elektrischen Kontakten einer vorzugsweise zu der Elektrokontaktkupplung 10 baugleich ausgeführten Gegenkupplung bereitzustellen, wobei hierzu insbesondere der bereits erwähnte und nachfolgend noch näher zu beschreibender Kontaktierungsträger 40 mit entsprechenden Kontaktzungen 42 zum Einsatz kommt.

Der Darstellung in Fig. 8 ist ferner zu entnehmen, dass die einzelnen elektrischen Kontakte 22, 32 des ersten bzw. zweiten Kontaktträgers 20, 30 vorzugsweise jeweils als aufnehmende Kontakte ausgeführt sind, die also ausgebildet sind, um einen entsprechend komplementär hierzu ausgebildeten (aufzunehmenden) elektrischen Kontakt aufzunehmen und somit eine elektrische Verbindung zwischen dem elektrischen Kontakt 22, 32 und dem komplementär ausgebildeten Gegenelement auszubilden. Im Einzelnen sind die einzelnen elektrischen Kontakte 22, 32 des ersten bzw. zweiten Kontaktträgers 20, 30 als aufnehmende (Englisch: male) Kontakte, insbesondere Schleif- oder Gleitkontakte ausgeführt.

Zurückkommend auf die Darstellungen in den Figuren 2a und 3a bleibt anzumerken, dass der erste Kontaktträger 20 sowie der zweite Kontaktträger 30 symmetrisch zu der senkrechten Spiegelachse S der Gehäusestirnfläche A angeordnet sind, wobei die beiden Kontaktträger 20, 30 vorzugsweise lös- und somit austauschbar mit dem Kupplungsgehäuse 11 der Elektrokontaktkupplung 10 fest verbunden sind. Dies ist insofern von Vorteil, inwiefern die einzelnen mit den entsprechenden Kontakten 22, 32 elektrisch verbundenen Daten- bzw. Signalleitungen (in den Zeichnungen nicht dargestellt) an ein starres bzw. starrgemachtes Element angeschlossen werden, infolge kein mechanischer Verschleiß dieser Daten- bzw. Signalleitungen aufgrund einer Relativbewegung auftritt.

Nachfolgend werden der Aufbau und die Funktionsweise der ersten exemplarischen Ausführungsform der Elektrokontaktkupplung 10 insbesondere unter Bezugnahme auf die Darstellungen in den Figuren 2a und 3a näher beschrieben.

Im Einzelnen ist in Fig. 2a die Elektrokontaktkupplung 10 in einem Zustand gezeigt, in welchem sämtliche Komponenten der Elektrokontaktkupplung 10 in dem Kupplungsgehäuse 11 aufgenommen sind. Mit anderen Worten, in dem in Fig. 2a gezeigten Zustand erstreckt sich keine Komponente der Elektrokontaktkupplung 10 aus den beiden in der Gehäusestirnfläche A des Kupplungsgehäuses 11 vorgesehenen Gehäuseöffnungen 23, 33. Hierbei liegt die Gehäusestirnfläche A des Kupplungsgehäuses 11 in der gemeinsamen Kuppelebene K, d.h. der vertikalen Ebene, in der eine mechanische Mittel- oder Mittelpufferkupplung (nicht dargestellt), mit der die Elektrokontaktkupplung 10 fest verbunden bzw. verbindbar ist, mit einer mechanischen Gegenkupplung verbunden ist.

In Fig. 3a ist die Elektrokontaktkupplung 10 gemäß der ersten exemplarischen Ausführungsform hingegen in einem kuppelbereiten Zustand gezeigt. In diesem kuppelbereiten Zustand ist ein plattenförmiger Kontaktierungsträger 40 relativ zu dem Kupplungsgehäuse 11 in Richtung der Kuppelebene K nach vorne verschoben, so dass der plattenförmige Kontaktierungsträger 40 zumindest bereichsweise aus der Gehäuseöffnung 33 des Kupplungsgehäuses 11 heraussteht und die vertikale Kuppelebene K schneidet. Ein Vergleich der Darstellungen in den Figuren 2a und 3a zeigt, dass zum Überführen der Elektrokontaktkupplung von ihrem Grundzustand (vgl. Fig. 2a) in ihren kuppelbereiten Zustand (vgl. Fig. 3a) die beiden Kontaktträger 20, 30 nicht relativ zu dem Kupplungsgehäuse 11 verschoben werden. Vielmehr wird zum Überführen der Elektrokontaktkupplung 10 in ihren kuppelbereiten Zustand (vgl. Fig. 3a) lediglich der bereits erwähnte plattenförmige Kontaktierungsträger 40 relativ zu dem Kupplungsgehäuse 11 in Richtung Kuppelebene K verschoben.

Hierzu kommt insbesondere ein Antrieb 50, insbesondere Linearantrieb zum Einsatz, welcher vorzugsweise in dem Kupplungsgehäuse 11 aufgenommen ist. Bei dem Antrieb 50, insbesondere Linearantrieb, handelt es sich vorzugsweise um einen pneumatisch, hydraulisch oder elektrisch angetriebenen Antrieb. Selbstverständlich ist es allerdings auch denkbar, eine mechanische Konstruktion vorzusehen, mit welcher der plattenförmige Kontaktierungsträger 40 selbstständig relativ zu dem Kupplungsgehäuse 11 in Richtung Kuppelebene K verschoben wird, wenn sich die Elektrokontaktkupplung 10 einer vorzugsweise baugleich hierzu ausgeführten Gegenkupplung annähert.

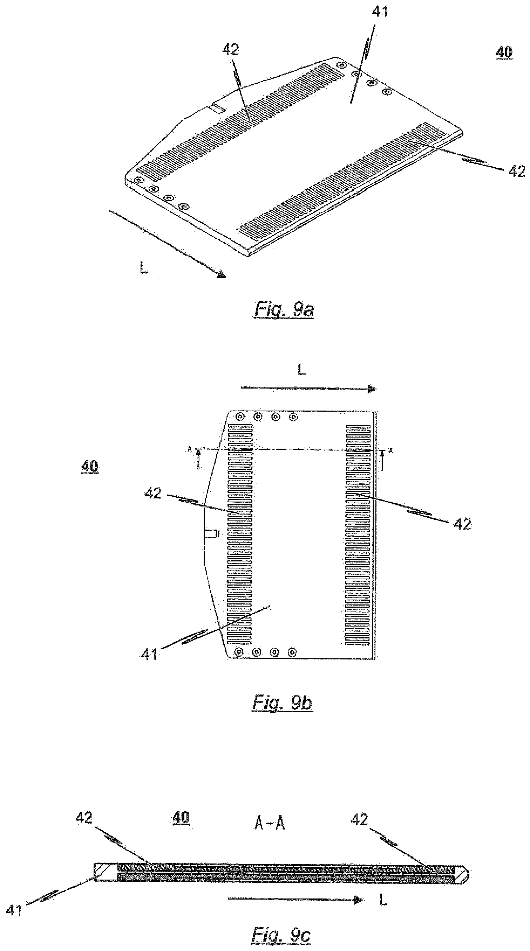

Nachfolgend werden unter Bezugnahme auf die Darstellungen in den Figuren 9a bis 9c der Aufbau und die Funktionsweise einer exemplarischen Ausführungsform des plattenförmigen Kontaktierungsträgers 40 näher beschrieben, der grundsätzlich für den Einsatz in dem hierin offenbarten exemplarischen Ausführungsformen der erfindungsgemäßen Elektrokontaktkupplung 10 geeignet ist. Im Einzelnen ist Fig. 9a eine perspektivische Ansicht der exemplarischen Ausführungsform des plattenförmigen Kontaktierungsträgers 40, während Fig. 9b eine Draufsicht des Kontaktierungsträgers 40 zeigt. Fig. 9c ist eine Schnittansicht entlang der Linie A-A in Fig. 9b.

Der plattenförmige Kontaktierungsträger 40 weist einen (plattenförmigen) Grundkörper 41 aus einem elektrisch nicht leitenden Isoliermaterial auf, wobei zusätzlich mindestens eine und vorzugsweise eine Vielzahl von nebeneinander ausgebildeter und sich in Längsrichtung L des Kontaktierungsträgers 40 erstreckende Kontaktzungen 42 vorgesehen sind. Die Kontaktzungen 42 sind aus einem elektrisch leitenden Material ausgebildet und dienen zum Durchkontaktieren der elektrischen Kontakte 32 des zweiten Kontaktträgers mit entsprechenden elektrischen Kontakten einer vorzugsweise baugleich zu der Elektrokontaktkupplung 10 ausgebildeten Gegenkupplung, wenn die Elektrokontaktkupplung 10 mit der Gegenkupplung gekuppelt ist. Wie es insbesondere der Darstellung in Fig. 9b sowie anhand der Schnittansicht in Fig. 9c erkannt werden kann, sind die Kontaktzungen 42 vorzugsweise in dem Isoliermaterial des Grundkörpers 41 zumindest bereichsweise eingebettet (integriert), um Beschädigungen der Kontaktzungen 42 zu vermeiden, wenn der plattenförmige Kontaktierungsträger 40 relativ zu dem Kupplungsgehäuse 11 von seiner ersten Position, in welcher der Kontaktierungsträger 40 vollständig in dem Kupplungsgehäuse 11 aufgenommen ist (vgl. Fig. 2a) in seine zweite Position verschoben wird, in welcher zumindest der stirnseitige Endbereich des Kontaktierungsträgers 40 aus der entsprechenden Gehäuseöffnung 33 des Kupplungsgehäuses 11 heraussteht (vgl. Fig. 3a).

Wesentlich ist, dass Kontaktzungen 42 vorzugsweise am vorderen sowie am hinteren Endbereich des Kontaktierungsträgers 40 frei liegen und dort in einem Gleit- oder Schleifkontakt mit entsprechenden elektrischen Kontakten treten können.

Bei den exemplarischen Ausführungsformen der erfindungsgemäßen Elektrokontaktkupplung 10 dient der plattenförmige Kontaktierungsträger 40 mit seinen in Längsrichtung L des Kontaktierungsträgers 40 angeordneten Kontaktzungen 42 zum elektrischen Durchkontaktieren der jeweiligen elektrischen Kontakte 32 des zweiten Kontaktträgers 30 mit elektrischen Kontakten einer vorzugsweise baugleich zu der erfindungsgemäßen Elektrokontaktkupplung 10 ausgebildeten Gegenkupplung.

Wenn sich der Kontaktierungsträger 40 in seiner ersten Position befindet, in welcher er vollständig in dem Kupplungsgehäuse 11 der Elektrokontaktkupplung 10 aufgenommen ist (vgl. Fig. 2a), sind die jeweiligen als Gleit- bzw. Schleifkontakt ausgebildeten elektrischen Kontakte 32 des zweiten Kontaktträgers 30 isoliert von den entsprechenden Kontaktzungen 42 des Kontaktierungsträgers 40, da die elektrischen Kontakte 32 den Bereich des Grundkörpers 41 des Kontaktierungsträgers 40 kontaktieren, in welchem die Kontaktzungen 42 nicht freiliegen. Dies ist insbesondere anhand der Schnittdarstellung in Fig. 2b erkennbar.

Wenn allerdings der Kontaktierungsträger 40 in seiner zweiten Position vorliegt und bereichsweise aus der Gehäuseöffnung 33 des Kupplungsgehäuses 11 heraussteht (vgl. Fig. 3a) stehen die als Gleit- bzw. Schleifkontakt ausgebildeten elektrischen Kontakte 32 des zweiten Kontaktträgers 30 mit den freiliegenden Bereichen der Kontaktzungen 42 in Verbindung. Dies ist insbesondere anhand der Darstellung in Fig. 3b erkennbar. In diesem Zustand liegt somit eine elektrische Verbindung zwischen den entsprechenden elektrischen Kontakten 32 des zweiten Kontaktträgers 30 und den entsprechend zugeordneten Kontaktzungen 42 vor. Der Kontaktierungsträger 40 mit seinen Kontaktzungen 42 eignet sich in diesem Zustand somit zum elektrischen Durchkontaktieren der elektrischen Kontakte 32.

Bei der in Fig. 2a bzw. in Fig. 3a dargestellten exemplarischen Ausführungsform der erfindungsgemäßen Elektrokontaktkupplung 10 kommt zusätzlich zu den Kontaktträgern 20, 30 ein optisches und/oder elektromagnetisches Signalübertragungsterminal 55 zum Einsatz, welches bei den hierin offenbarten exemplarischen Ausführungsformen der erfindungsgemäßen Elektrokontaktkupplung 10 mittig in der Gehäusestirnfläche A, und zwar auf der senkrechten Spiegelachse S der Gehäusestirnfläche A angeordnet ist. Insofern teilt sich die in der Gehäusestirnfläche A vorgesehene frontseitige Gehäuseöffnung in zwei von den Signalübertragungsterminal 55 voneinander getrennte frontseitige Gehäuseöffnungen 23, 33.

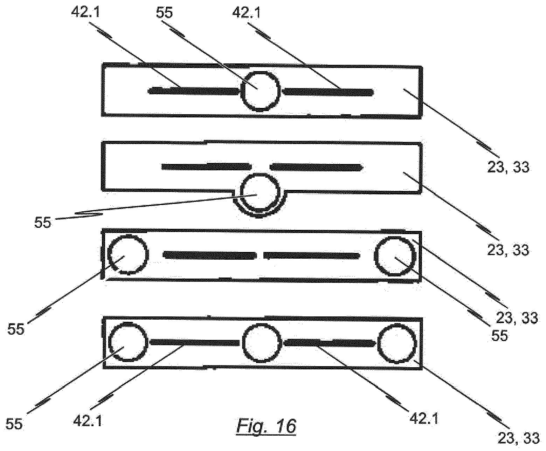

Andererseits ist denkbar, dass das optische und/oder elektromagnetische Signalübertragungsterminal 55 nicht mittig in der Gehäusestirnfläche A angeordnet ist, sondern wie in Fig. 16 beispielhaft gezeigt in der Gehäusestirnfläche A angeordnet ist. In Fig. 16 entspricht die Darstellung i) im Wesentlichen der Anordnung des Signalübertragungsterminals 55 in der Mitte von Schlitzen 42.1 für die Kontaktzungen 42 wie bisher beschrieben.

Andererseits ist bei der Darstellung ii) in Fig. 16 zu erkennen, dass das Signalübertragungsterminal 55 auch versetzt zur senkrechten Spiegelachse S der Gehäusestirnfläche A angeordnet sein kann. Ebenso ist denkbar, dass mehrere Signalübertragungsterminals 55, gezeigt in der Darstellung iii) in Fig. 16, in der Gehäusestirnfläche A angeordnet sein können.

Schließlich können die Signalübertragungsterminals 55 in Kombination der Darstellungen i), ii), iii) und/oder iv) aus Fig. 16 angeordnet sein. Insbesondere ist denkbar, dass Anordnungen gleicher Art (z.B. i), i), i)), Mischungen/Kombinationen (z.B. i), ii), iv), iii)) geeignet gewählt werden, und auch beispielsweise Anordnungen vertikal übereinander vorgenommen werden.

Die Anordnung der Signalübertragungsterminals 55 oder eines einzelnen Signalübertragungsterminals 55 und der Anzahl der Signalübertragungsterminals 55 kann so gewählt werden, dass hohe Datenübertragungsraten ermöglicht werden, und/oder die Sicherheit bei der Datenübertragung, beispielsweise durch ein redundantes System, gewährleistet ist.

Um zu verhindern, dass Feuchtigkeit oder Schmutz über diese frontseitigen Gehäuseöffnungen 23, 33 im ungekuppelten Zustand der Elektrokontaktkupplung 10 in das Kupplungsgehäuse 11 eindringen können, sind die frontseitigen Gehäuseöffnungen 23, 33 vorzugsweise entsprechend abgedichtet. Die hierzu zum Einsatz kommende Dichtungsanordnung 60 kann beispielsweise eine entsprechende Lamellendichtung, Druckdichtung, Bürstendichtung oder aber auch eine mechanische Klappe aufweisen. Wie es der Schnittansicht in Fig. 2b entnommen werden kann, kommt bei der ersten exemplarischen Ausführungsform insbesondere eine Lamellendichtung für die Dichtungsanordnung 60 zum Einsatz.

In Fig. 4 ist in einer Schnittansicht der Aufbau des ersten und zweiten Kontaktträgers 20, 30 gezeigt, welcher bei der ersten exemplarischen Ausführungsform der erfindungsgemäßen Elektrokontaktkupplung 10 zum Einsatz kommt. Kurz zusammengefasst ist bei dieser exemplarischen Ausführungsform vorgesehen, dass der erste und zweite Kontaktträger 20, 30 insgesamt baugleich ausgeführt sind. Die elektrischen Kontakte 22, 32 des Kontaktträgers 20, 30 sind als aufnehmende (Englisch: male) Teile ausgeführt, wobei eine elektrische Durchkontaktierung mit einem entsprechend komplementär ausgebildeten Kontaktelement (aufzunehmendes bzw. female Kontaktelement) durch Gleit- bzw. Reibkontakt erfolgt.

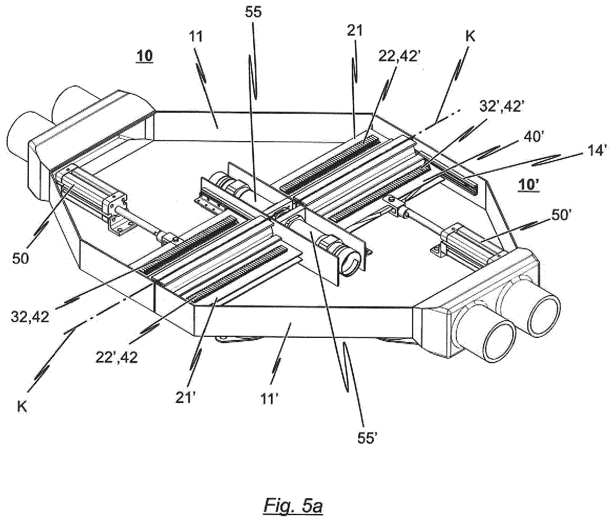

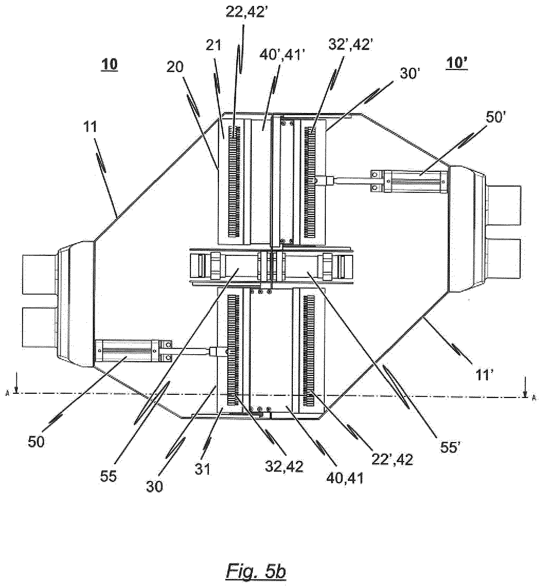

Nachfolgend wird unter Bezugnahme auf die Darstellungen in den Figuren 5a und 5b die Funktionsweise der Elektrokontaktkupplung 10 gemäß der ersten exemplarischen Ausführungsform näher beschrieben. Im Einzelnen ist Fig. 5a eine perspektivische Ansicht auf die erste exemplarische Ausführungsform der erfindungsgemäßen Elektrokontaktkupplung 10 mit entferntem Kupplungsgehäusedeckel 12, wobei die Elektrokontaktkupplung 10 in einem Zustand gezeigt ist, in welchem sie mit einer baugleich zu der Elektrokontaktkupplung 10 ausgeführten Gegenkupplung 10', gekuppelt ist. Fig. 5b zeigt eine Draufsicht auf die Kupplungsanordnung gemäß Fig. 5a.

Hierbei ist anzumerken, dass die entsprechenden Komponenten der Gegenkupplung 10' mit den gleichen Bezugsziffern bezeichnet sind, wie die Komponenten der Elektrokontaktkupplung 10, wobei allerdings die entsprechenden Bezugsziffern für die Komponenten der Gegenkupplung jeweils mit einem Hochkomma versehen sind.

Wie dargestellt sind in dem gekuppelten Zustand die beiden Kontaktierungsträger 40, 40', der Elektrokontaktkupplung 10 bzw. der Gegenkupplung 10' jeweils in die gemeinsame Kuppelebene K aus der entsprechenden frontseitigen Gehäuseöffnung nach vorne verschoben. Dies erfolgt durch ein entsprechendes Ansteuern der in den Kupplungsgehäusen 11, 11' vorgesehen Linearantrieben 50, 50'. Demnach liegen die beiden Kontaktierungsträger 40, 40' jeweils in ihrer zweiten Position vor, in welcher - wie bereits unter Bezugnahme auf die Darstellung in Fig. 3b beschrieben - dann die entsprechenden Kontaktzungen 42, 42' der Kontaktierungsträger 40, 40' elektrisch mit den Kontakten 32, 32' des zweiten Kontaktträgers 30, 30' stehen.

Andererseits greift der frontseitige Endbereich des Kontaktierungsträgers 40 in den ersten Kontaktträger 20 der Gegenkupplung ein, so dass die Kontakte 22, 22' des ersten Kontaktträgers 20, 20' über die entsprechen Kontaktzungen 42, 42' des entsprechenden Kontaktierungsträgers 40, 40' mit den Kontakten 32, 32' des zweiten Kontaktträgers 30, 30' der entsprechenden Gegenkupplung elektrisch verbunden bzw. durchkontaktiert sind.

Des Weiteren ist den Darstellungen in den Figuren 5a und 5b zu entnehmen, dass in dem gekuppelten Zustand die im Hinblick auf die entsprechende Gehäusestirnfläche A mittig angeordneten Signalübertragungsterminals 55, 55' gegeneinander ausgerichtet sind und somit eine optische und/oder elektromagnetische Signal- bzw. Datenübertragung über diese Signalübertragungsterminals 55, 55' gewährleistet ist.

Der Darstellung in Fig. 5a ist insbesondere zu entnehmen, dass die Elektrokontaktkupplungen 10, 10' jeweils mit Führungsschienen 14 versehen sind, um die Kontaktierungsträger 40, 40' bei deren Bewegung relativ zu dem entsprechenden Kupplungsgehäuse 11, 11' zu führen. Hierbei greifen die Seitenkanten der Kontaktierungsträger 40, 40' in die entsprechenden Führungsschienen 14 ein.

Andererseits übernimmt auch der erste Kontaktträger 20, 20' eine Führungsfunktion, da durch den entsprechenden ersten Kontaktträger 20, 20' der zugehörige Kontaktierungsträger 40, 40' gleitet und somit geführt wird.

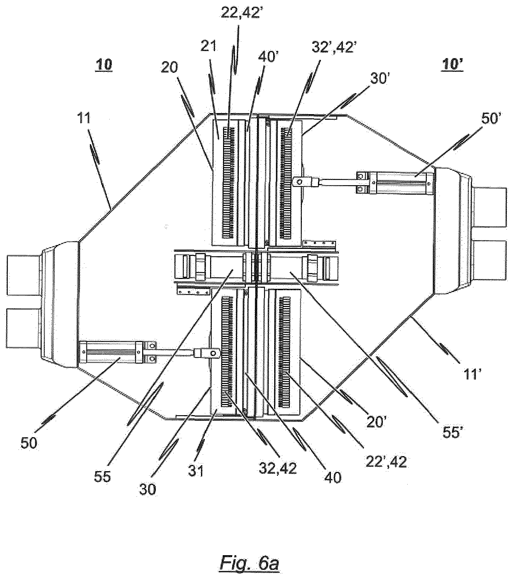

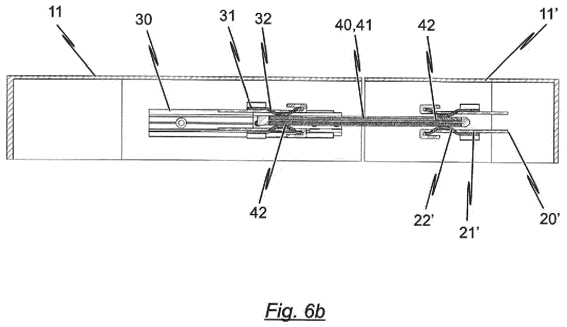

In den Figuren 6a und 6b ist eine weitere exemplarische Ausführungsform der erfindungsgemäßen Elektrokontaktkupplung 10 dargestellt, wobei sich diese Elektrokontaktkupplung 10 erneut in einem gekuppelten Zustand befindet. Im Einzelnen ist die Elektrokontaktkupplung 10 gemäß der weiteren (zweiten) exemplarischen Ausführungsform mit einer baugleich hierzu ausgeführten Gegenkupplung 10' verbunden.

Fig. 6a zeigt dabei die gekuppelte Elektrokontaktkupplungsanordnung in einer Draufsicht, und zwar jeweils mit entferntem Kupplungsgehäusedeckel 12. Fig. 6b ist eine Schnittansicht entlang der Linie A-A in Fig. 6a.

Der Aufbau und die Funktionsweise der in den Figuren 6a und 6b dargestellten zweiten exemplarischen Ausführungsform entsprechen im Wesentlichen dem Aufbau und der Funktionsweise der zuvor beschriebenen ersten exemplarischen Ausführungsform, wobei allerdings bei der zweiten exemplarischen Ausführungsform Kontaktierungsträger 40, 40' zum Einsatz kommen, die etwas länger ausgeführt sind im Vergleich zu den bei der ersten exemplarischen Ausführungsform zum Einsatz kommenden Kontaktierungsträgern. Insofern sind bei der zweiten exemplarischen Ausführungsform die entsprechenden ersten und zweiten Kontaktträger 20, 20'; 30, 30' weiter von der gemeinsamen Kuppelebene K entfernt, innerhalb des entsprechenden Kupplungsgehäuses 11, 11' angeordnet und dort fest mit dem Kupplungsgehäuse 11, 11' verbunden. Im Übrigen entspricht der Aufbau der zweiten exemplarischen Ausführungsform dem Aufbau der zuvor beschriebenen ersten exemplarischen Ausführungsform. Um Wiederholungen zu vermeiden, wird von daher an dieser Stelle auf die vorherigen Ausführungen verwiesen.

Fig. 7a ist eine perspektivische Ansicht auf eine weitere (dritte) exemplarische Ausführungsform der erfindungsgemäßen Elektrokontaktkupplung 10, wobei diesmal die Elektrokontaktkupplung 10 mit dem Kupplungsgehäusedeckel 12 gezeigt ist. Des Weiteren ist die Elektrokontaktkupplung 10 in der Darstellung gemäß Fig. 7a mit einer entsprechend baugleich ausgeführten Gegenkupplung 10' gekuppelt.

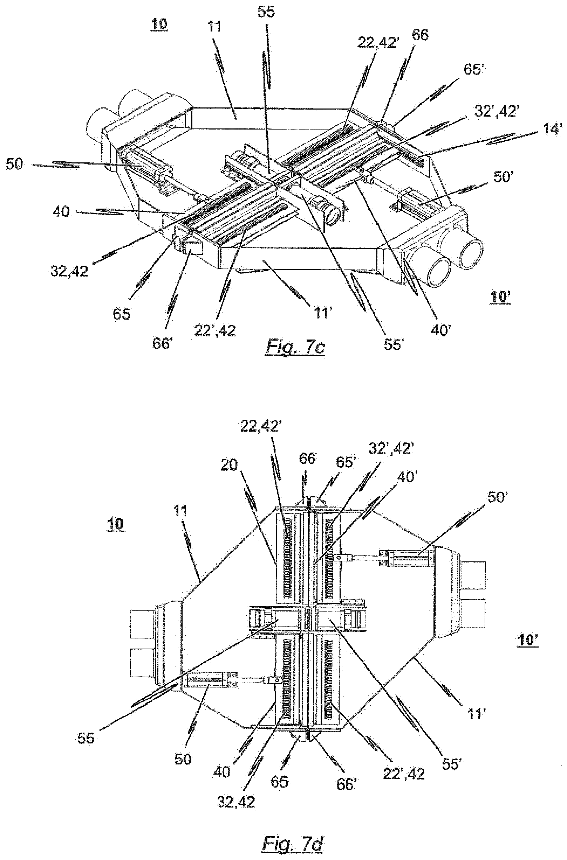

Fig. 7b zeigt eine Draufsicht auf die Kupplungsanordnung gemäß Fig. 7a, während Fig. 7c die Kupplungsanordnung gemäß Fig. 7a in einem Zustand zeigt, in welchem die entsprechenden Kupplungsgehäusedeckel 12, 12' der Elektrokontaktkupplung 10 sowie der Gegenkupplung 10' entfernt wurden. Fig. 7d zeigt die Kupplungsanordnung gemäß Fig. 7c in einer Draufsicht.

Die dritte exemplarische Ausführungsform der erfindungsgemäßen Elektrokontaktkupplung 10 entspricht im Wesentlichen der zuvor beschriebenen ersten exemplarischen Ausführungsform, wobei allerdings bei der dritten Ausführungsform noch zusätzliche Zentrierorgane an den entsprechenden Kupplungsgehäusen 11, 11' der Elektrokontaktkupplung 10 bzw. der Gegenkupplung 10' vorgesehen sind. Die Zentrierorgane, die bei der dritten exemplarischen Ausführungsform der erfindungsgemäßen Lösung Anwendung finden, sind als Zentrierdorn 65 und Zentrierhülse 66 ausgebildet und dienen zum selbstständigen Zentrieren der beiden Elektrokontaktkupplungen 10, 10' wenn diese beim Kupplungsvorgang sich einander annähern. Selbstverständlich können die Zentrierorgane (Zentrierdorn 65; Zentrierhülse 66) auch an anderen Positionen angeordnet sein. Darüber hinaus kommen aber auch andere Ausführungsformen für die Zentrierorgane in Frage.

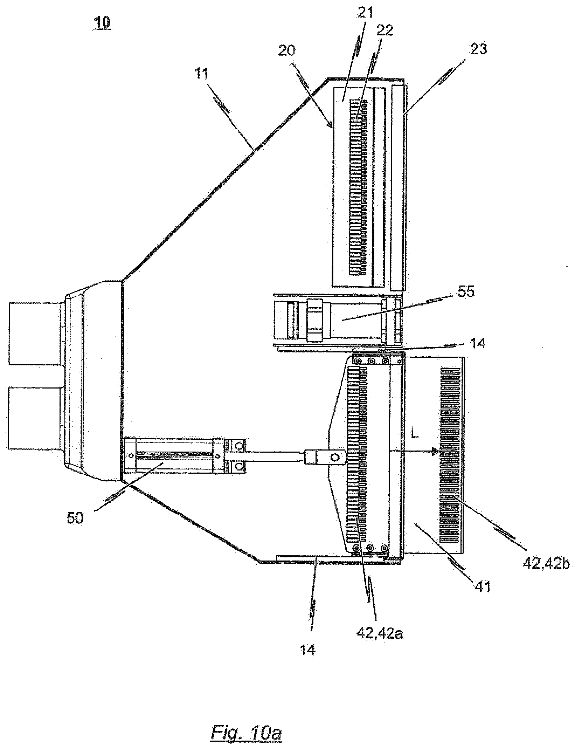

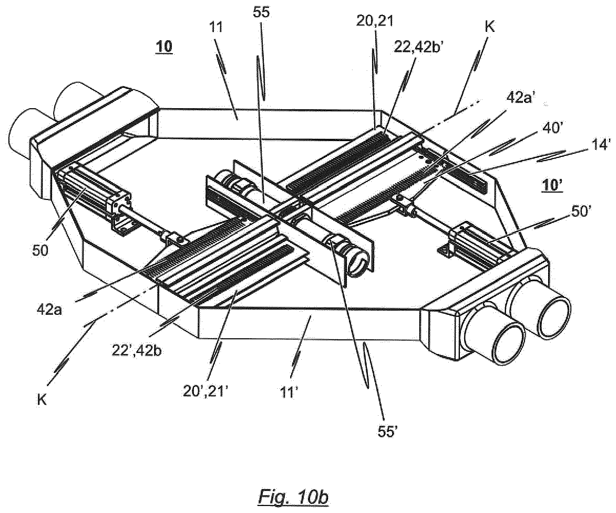

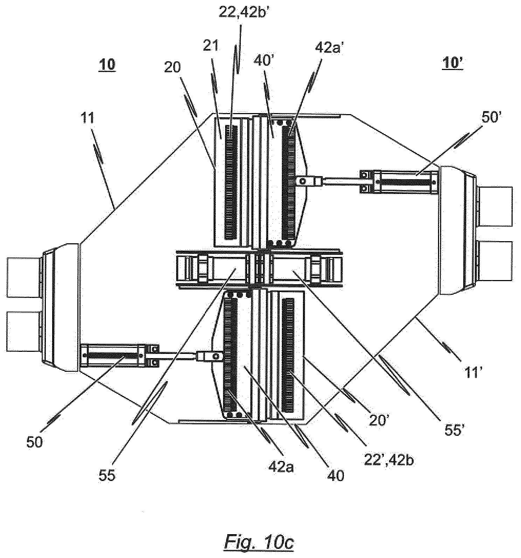

Fig. 10a ist eine Draufsicht auf eine weitere (vierte) exemplarische Ausführungsform der erfindungsgemäßen Elektrokontaktkupplung 10, wobei die Elektrokontaktkupplung 10 abermals keinen Kupplungsgehäusedeckel 12 aufweist. Des Weiteren zeigt die Fig. 10b die Elektrokontaktkupplung 10 gemäß der vierten exemplarischen Ausführungsform in einer perspektivischen Darstellung, wobei die Elektrokontaktkupplung 10 hierbei mit einer entsprechend baugleich ausgeführten Gegenkupplung 10', gemäß der vierten Ausführungsform, gekuppelt ist. Schließlich wird in Fig. 10c eine Draufsicht auf eine Kupplungsanordnung gemäß Fig. 10b gezeigt. Auch bei den Figuren 10b und 10c sind die Kupplungsgehäusedeckel 12 bzw. 12', nicht gezeigt, um den Aufbau der Elektrokontaktkupplung 10 bzw. 10' zu verdeutlichen.

Die vierte exemplarische Ausführungsform der erfindungsgemäßen Elektrokontaktkupplung 10 entspricht im Wesentlichen den zuvor beschriebenen ersten bis dritten exemplarischen Ausführungsformen, wobei allerdings bei der vierten Ausführungsform auf den insbesondere aus Fig. 2a erkennbaren zweiten Kontaktträger 30, der vorzugsweise baugleich mit dem ersten Kontaktträger 20 ausgeführt ist, verzichtet wurde.

Somit weist auch die Elektrokontaktkupplung 10 gemäß der vierten Ausführungsform der vorliegenden Erfindung ein Kupplungsgehäuse 11 auf, in welchem alle Komponenten der Elektrokontaktkupplung 10 untergebracht sind. Im Einzelnen ist in dem Kupplungsgehäuse 11, der in den Figuren 10a bis 10c dargestellten Elektrokontaktkupplung, ein erster Kontaktträger 20 in einer ersten Hälfte des Kupplungsgehäuses 11 angeordnet. Ein zweiter Kontaktträger ist in der gegenüberliegenden zweiten Kupplungsgehäusehälfte angeordnet. Dieser ist insbesondere als hinterer Endbereich 42a der mindestens einen Kontaktzunge 42 ausbildet. Dementsprechend ist der zweite Kontaktträger gemäß dieser vierten Ausführungsform direkt auf dem Kontaktierungsträger 40 angeordnet, wodurch es keinen separaten, zweiten Kontaktträger (beispielsweise 30, Fig. 2a) bedarf.

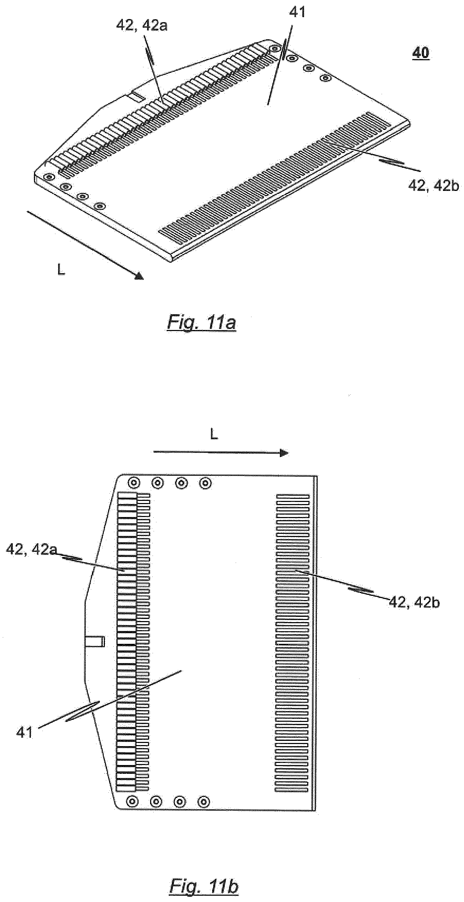

Hierzu ist eine veränderte Ausbildung des plattenförmigen Kontaktierungsträgers 40 nötig. Eine derartige, zweite exemplarische Ausführungsform des plattenförmigen Kontaktierungsträgers 40 ist in den Figuren 11a und 11b dargestellt. Im Einzelnen ist die Fig. 11a eine perspektivische Ansicht der zweiten exemplarischen Ausführungsform des plattenförmigen Kontaktierungsträgers 40, während Fig. 9b eine Draufsicht des Kontaktierungsträgers 40 zeigt.

Der plattenförmige Kontaktierungsträger 40, gemäß dieser zweiten Ausführungsform, weist einen (plattenförmigen) Grundkörper 41 aus einem elektrisch nicht leitenden Isoliermaterial auf, wobei zusätzlich mindestens eine und vorzugsweise eine Vielzahl von nebeneinander ausgebildeten und sich in längs Richtung L des Kontaktierungsträgers 40 erstreckende Kontaktzungen 42 vorgesehen sind. Wie bereits erwähnt, sind die Kontaktzungen 42 aus einem elektrisch leitenden Material ausgebildet und dienen zum Durchkontaktieren der elektrischen Kontakte des zweiten Kontaktträgers mit entsprechenden elektrischen Kontakten einer vorzugsweise baugleich zu der Elektrokontaktkupplung 10 ausgebildeten Gegenkupplung.

Die Kontaktzungen 42 sind vorzugsweise in dem Isoliermaterial des Grundkörpers 41 zumindest bereichsweise eingebettet (integriert) um Beschädigungen der Kontaktzunge 42 zu vermeiden, wenn der plattenförmige Kontaktierungsträger 40 relativ zu dem Kupplungsgehäuse 11 von seiner ersten Position, in welcher der Kontaktierungsträger 40 vollständig in dem Kupplungsgehäuse 11 aufgenommen ist in seine zweite Position verschoben wird, in welcher zumindest der stirnzeitige Endbereich des Kontaktierungsträgers 40 auf der entsprechenden Gehäuseöffnung 33 des Kupplungsgehäuses 11 heraussteht.

Insbesondere liegen die Kontaktzungen 42 vorzugsweise am vorderen sowie am hinteren Endbereich des Kontaktierungsträgers 40 frei. Die Kontaktzungen 42 weisen demnach einen frei liegenden, hinteren Endbereich 42a sowie einen frei liegenden, vorderen Endbereich 42b auf. Dabei ist der hintere Endbereich 42a der Kontaktzungen 42 als zweiter Kontaktträger ausgebildet. Dieser weist dementsprechend mindestens einen und vorzugsweise eine Vielzahl von nebeneinander angeordneten elektrischen Kontakten 32a auf. Die einzelnen, nebeneinander angeordneten elektrischen Kontakte 32a sind elektrisch voneinander isoliert und ausgebildet, um jeweils mit einer Daten- oder Signalleitung elektrisch verbunden zu werden. Aus Gründen der Übersichtlichkeit, sind in den Figuren 10a bis 11b die Daten- bzw. Signalleitungen nicht eingezeichnet. Es ist jedoch selbsterklärend, dass die Daten- bzw. Signalleitungen gemäß der vierten Ausführungsform beispielsweise an den jeweiligen Endbereichen der elektrischen Kontakte 32a des Kontaktträgers 40, insbesondere durch Lötung, angeschlossen werden können. Somit kann gemäß der vierten Ausführungsform auf einen separaten zweiten Kontaktträger (beispielsweise 30, Fig. 2a) verzichtet werden, wodurch die Anzahl der Verschleißteile weiter verringert wird.

Wie es den Figuren 10b und 10c entnommen werden kann, ist es demnach zum Kontaktieren der baugleich ausgeführten Elektrokontaktkupplung 10' lediglich notwendig, dass die frei liegenden, vorderen Endbereiche 42b, 42b' der jeweiligen Kontaktzungen 42, 42' mit den elektrischen Kontakten 22, 22' des jeweiligen ersten Kontaktträgers 20, 20' in Verbindung gebracht werden. Die Kontaktierung der am vorderen Endbereich des Kontaktierungsträgers 40 angeordneten vorderen Endbereiche 42b, 42b' der Kontaktzungen 42, 42' mit den Kontakten 22, 22' der ersten Kontaktträger 20, 20' erfolgt insbesondere identisch wie bereits im Hinblick auf die ersten drei Ausführungsbeispiele beschrieben.

Gemäß einer weiteren Ausführungsform können hintere Endbereiche 42a, 42a' der jeweiligen Kontaktzungen 42, 42'auf dem als flexible Leiterplatte ausgebildeten Kontaktierungsträger 40 ausgebildet sein. In diesem Fall findet die Kontaktierung der hinteren Endbereiche 42a, 42a' mit den Kontakten 32, 32' der Kontaktträger 30, 30' dadurch, dass die den Kontaktierungsträger 40 ausbildende Leiterplatte durch eine Vorspannung der Leiterplatten an die elektrischen Kontakte 32, 32' gedrückt wird, wobei dies nur auf einer Seite der Leiterplatte geschieht. Durch die Vorspannung der flexiblen Leiterplatte wird sichergestellt, dass die Leiterplatte mit einem gewissen (voreingestelltem oder voreinstellbarem) Pressdruck an die Kontakte 32, 32' gedrückt wird, um somit eine sichere Übertragung von Daten, Signalen und/oder elektrischem Strom ermöglicht wird.

Eine derartige flexible Leiterplatte ist ausgelegt, die mechanischen Belastungen auf die Kontaktzungen 42, 42' sowie auf die elektrischen Kontakte 32, 32' zu reduzieren, da die Kontakte 32, 32' innerhalb eines gewissen räumlichen Spielraums des Kontaktträgers 40 sicher kontaktiert werden, ohne dass in diesem Spielraum eine signifikante mechanische Belastung der flexiblen Leiterplatte, der Kontaktzungen 42, 42' und der elektrischen Kontakte 32, 32' auftritt.

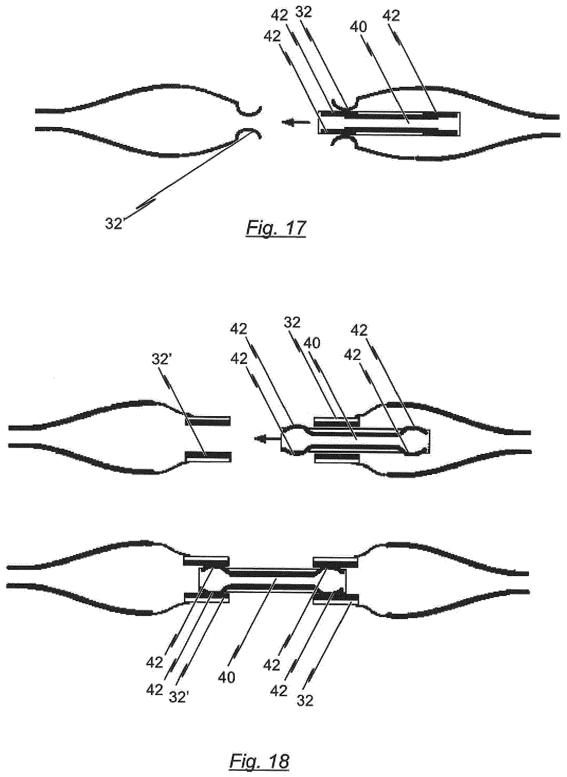

Fig. 17 zeigt den Fall, dass der Kontaktierungsträger 40 in der ersten Position der Elektrokontaktkupplung, in der keine Kupplung mit einer entsprechenden Gegenkupplung 10' stattgefunden hat, derart angeordnet ist, dass die Kontaktzungen 42 im vorderen Endbereich des Kontaktierungsträgers 40 nicht in Kontakt mit elektrischen Kontakten 32 stehen. Dies bedeutet, dass die vorderen Kontaktzungen 42 des Kontaktierungsträgers 40 nicht doppelt so viele Zyklen (beim Koppeln der Elektrokupplung 10 mit einer Gegenkupplung 10') durchlaufen als die Kontaktzungen 42 im hinteren Bereich des Kontaktierungsträgers 40, was der Fall wäre, wenn die vorderen Kontaktzungen 42 bis zu den Kontakten 32 zurückgezogen würden.

Wie in Fig. 18 gezeigt, ist denkbar, dass die Kontaktzungen 42, 42' federnde Elemente 42.2 aufweisen, welche in einem Zustand der Kopplung zwischen der Elektrokontaktkupplung 10 und einer entsprechenden Gegenkupplung 10' einen Kontakt mit elektrischen Kontakten 22, 22', 32, 32' herstellen.

Die federnden Elemente 42.2 sind derart ausgebildet, dass ein elektrischer Kontakt zwischen den Kontaktzungen 42, 42' und den elektrischen Kontakten 22, 22', 32, 32' hergestellt wird, wenn die Kontaktzungen 42 mittels des Kontaktierungsträgers 40 aus dem Kupplungsgehäuse 11 der Elektrokontaktkupplung 10 herausbewegt und in Richtung einer entsprechenden Gegenkupplung 10' geschoben werden.

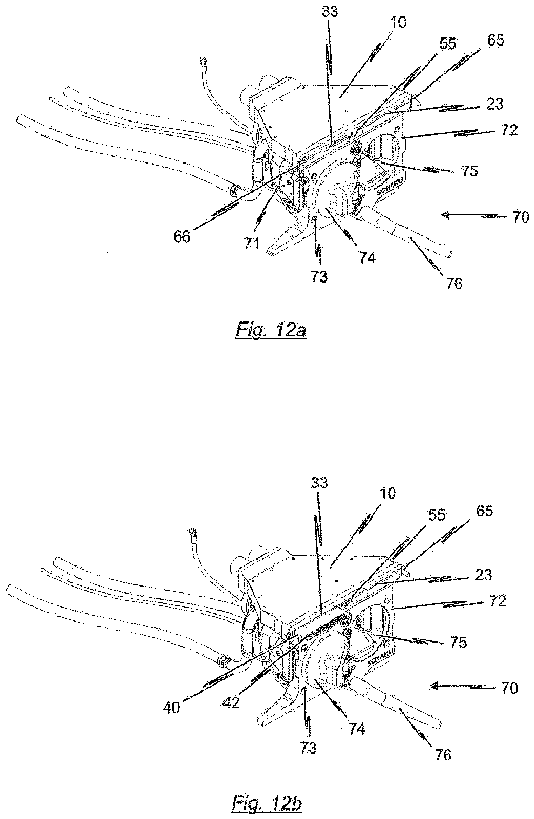

Fig. 12a zeigt in einer perspektivischen Ansicht einen mechanischen Kupplungskopf 70 eines spurgeführten Fahrzeuges, welcher mit einer exemplarischen Ausführungsform der erfindungsgemäßen Elektrokontaktkupplung 10 ausgerüstet ist. Im Einzelnen ist in Fig. 10a die Elektrokontaktkupplung 10 in ihrem nicht kuppelbereiten Zustand gezeigt, d.h. in einem Zustand, in welchem der plattenförmige Kontaktierungsträger 40 der Elektrokontaktkupplung 10 vollständig in dem Kupplungsgehäuse 11 der Kontaktkupplung 10 aufgenommen ist (erste Position des Kontaktierungsträgers 40).

In Fig. 12b ist der (mechanische) Kupplungskopf 70 der automatischen Mittelpufferkupplung mit der daran befestigten Elektrokontaktkupplung 10 gemäß Fig. 12a gezeigt, wobei allerdings hier die Elektrokontaktkupplung 10 in ihrem kuppelbereiten Zustand vorliegt, d.h. in einem Zustand, in welchem der plattenförmige Kontaktierungsträger 40 der Elektrokontaktkupplung 10 zumindest bereichsweise aus dem Kupplungsgehäuse 11 der Elektrokontaktkupplung 10 hervorsteht und in die gemeinsame vertikale Kuppelebene K zeigt.

Bei dem mechanischen Kupplungskopf 70 gemäß den Darstellungen in den Figuren 12a und 12b handelt es sich um den Kupplungskopf einer automatischen Mittelpufferkupplung vom Typ Scharfenberg®. Dieser mechanische Kupplungskopf, welcher allgemein mit der Bezugsziffer "70" bezeichnet wird, weist im Wesentlichen ein Kupplungskopfgehäuse 71 sowie eine das Kupplungskopfgehäuse 71 stirnseitig abschließende Stirnplatte 72 auf. Die Stirnplatte 72 ist mit Hilfe von Schrauben 73 mit dem Kupplungskopfgehäuse 71 des mechanischen Kupplungskopfes 70 lösbar verbunden. In dem Kupplungskopfgehäuse 71 sind der Kupplungsverschluss sowie der Entkuppelzylinder aufgenommen.

An der Stirnplatte 72 des mechanischen Kupplungskopfes 70 sind vorzugsweise alle kupplungskopftypbezogene Konstruktionsmerkmale angeordnet, wobei hierunter sämtliche wesentlichen konstruktionsbedingten Merkmale zu verstehen sind, die für einem Kupplungskopftyp gemeinsam sind, und die den Kupplungskopftyp der Funktionsweise charakterisieren. Beispielsweise sind die Festlegung des Greifbereichs (mit Hilfe des Greifers 76) oder die Größe und/oder Form von Trichter 75 und Kegel 74 ein solches kupplungskopftypbezogenes Konstruktionsmerkmal, da diese Merkmale charakteristisch für den Verschluss des Kupplungskopfes 70 sind.

Im Hinblick auf die vorliegende Erfindung ist es wesentlich, dass die Elektrokontaktkupplung 10 fest, d.h. starr, mit dem mechanischen Kupplungskopf 70 und insbesondere mit dem Kupplungskopfgehäuse 71 des mechanischen Kupplungskopfes 70 verbunden ist. Dies kann - wie in der exemplarischen Ausführungsform gemäß Fig. 12 gezeigt - beispielsweise dadurch erfolgen, dass die Elektrokontaktkupplung 10 oberhalb des mechanischen Kupplungskopfes 70 fest mit dem mechanischen Kupplungskopf 70 verbunden wird. Selbstverständlich ist es aber auch denkbar, die Elektrokontaktkupplung 10 seitlich des mechanischen Kupplungskopfes 70 oder unterhalb des mechanischen Kupplungskopfes 70 anzuordnen. Auch ist es denkbar, mehrere Elektrokontaktkupplungen 10 an einem mechanischen Kupplungskopf 70 anzuordnen, beispielsweise sowohl seitlich als auch oberhalb oder unterhalb des mechanischen Kupplungskopfes 70. Alle Ausführungsvarianten haben gemeinsam, dass das Kupplungsgehäuse 11 der Elektrokontaktkupplung 10 fest, d.h. starr mit dem mechanischen Kupplungskopf 70 verbunden ist. Insbesondere ist keine Bewegung des Kupplungsgehäuses 11 der Elektrokontaktkupplung 10 relativ zu dem mechanischen Kupplungskopf 70 mehr erforderlich, wie es bei den aus dem Stand der Technik bekannten Lösungen zwingend erforderlich war.

Wie es insbesondere der Darstellung in Fig. 12b entnommen werden kann, ist die Elektrokontaktkupplung 10 derart mit dem mechanischen Kupplungskopf 70 verbunden, dass die Gehäusestirnfläche A der Elektrokontaktkupplung 10 mit der Stirnplatte 72 des mechanischen Kupplungskopfes 70 fluchtet, so dass diese in der gemeinsamen vertikalen Kuppelebene K des mechanischen Kupplungskopfes 70 vorliegen.

Selbstverständlich ist es aber auch denkbar, dass die Elektrokontaktkupplung 10 leicht nach hinten versetzt angeordnet wird.

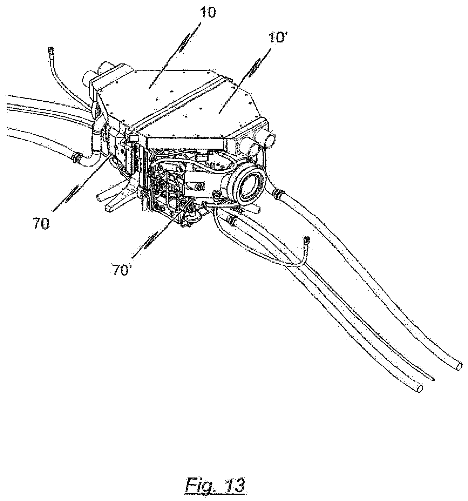

Fig. 13 ist eine perspektivische Ansicht des mechanischen Kupplungskopfes 70 gemäß Fig. 12b, wobei der mechanische Kupplungskopf 70 zusammen mit der mit dem mechanischen Kupplungskopf 70 verbundenen Elektrokontaktkupplung 10 mit einem entsprechend baugleich ausgeführten mechanischen Kupplungskopf 70' verbunden (gekuppelt) ist. Anhand der Darstellung in Fig. 13 ist insbesondere ersichtlich, dass das Kupplungsgehäuse 11 der Elektrokontaktkupplung 10 nur noch eine sehr geringe Bauhöhe aufweist; es handelt sich somit um einen sehr kompakten Aufbau, der nur wenig Bauraum benötigt.

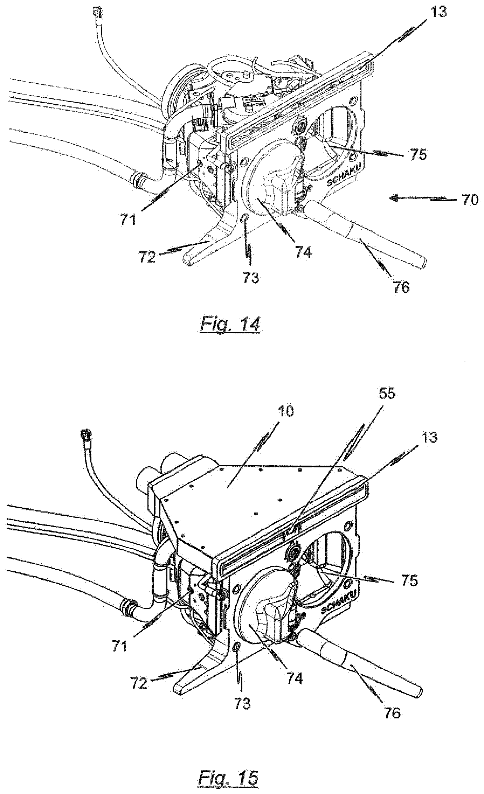

Fig. 14 zeigt in einer perspektivischen Ansicht eine weitere exemplarische Ausführungsform eines mechanischen Kupplungskopfes 70, der insbesondere zur Verwendung mit einer Elektrokontaktkupplung 10 gemäß der vorliegenden Erfindung geeignet ist. Im Unterschied zu dem mechanischen Kupplungskopf gemäß Fig. 12a ist der mechanische Kupplungskopf 70 gemäß Fig. 14 mit einer Stirnplatte 72 versehen, die im oberen Bereich über der Stirnseite des Kupplungskopfgehäuses 71 des mechanischen Kupplungskopfes 70 hervorsteht und die spaltförmige Öffnung (Gehäuseöffnungen 23, 33) für eine mit dem mechanischen Kupplungskopf 70 zu verbindende Elektrokontaktkupplung 10 bereit stellt.

Fig. 15 zeigt in einer perspektivischen Ansicht den mechanischen Kupplungskopf 70 gemäß der Darstellung in Fig. 14, wobei diesmal eine exemplarische Ausführungsform der erfindungsgemäßen Elektrokontaktkupplung 10 mit dem mechanischen Kupplungskopf 70 verbunden ist. Bei dieser Ausführungsform ist es beispielsweise denkbar, dass die (starre) Verbindung zwischen der Elektrokontaktkupplung 10 und dem mechanischen Kupplungskopf 70 über die Stirnplatte 72 des mechanischen Kupplungskopfes 70 erfolgt. Dadurch, dass die Stirnplatte 72 des mechanischen Kupplungskopfes 70 die spaltförmige Öffnung (frontseitige Gehäuseöffnungen 23, 33) der Elektrokontaktkupplung 10 definiert, ist sichergestellt, dass die Gehäusestirnfläche A der Elektrokontaktkupplung mit der Stirnplatte 72 des mechanischen Kupplungskopfes fluchtet und in der gemeinsamen vertikalen Kuppelebene K liegt.

Die Erfindung ist nicht auf die in den Zeichnungen gezeigten exemplarischen Ausführungsformen beschränkt, sondern ergibt sich aus einer Zusammenschau sämtlicher hierin offenbarter Merkmale.

Insbesondere zeichnet sich die Erfindung dadurch aus, dass eine Elektrokontaktkupplung 10 angegeben wird, die beim Kuppeln keine Relativbewegung mehr zu einem mechanischen Kupplungskopf 70 macht, mit welchem die Elektrokontaktkupplung 10 starr verbunden ist.

Darüber hinaus zeichnet sich die Erfindung durch das Vorsehen des plattenförmigen Kontaktierungsträgers 40 mit den entsprechenden Kontaktzungen 42 auf. Dadurch ist es möglich, dass die strom- oder datenführenden Kabel beim Kuppeln der Elektrokontaktkupplung 10 nicht mehr relativ zu der Elektrokontaktkupplung 10 bewegt werden und somit der mechanische Verschleiß der Kabel erheblich reduziert wird.

Zudem kann die gesamte Mechanik, die für den elektrischen Kupplungsvorgang benötigt wird, im Kupplungsgehäuse 11 der Elektrokontaktkupplung 10 integriert werden. Die Kontaktzungen 42 des Kontaktierungsträgers 40 werden beim elektrischen Kuppeln in die Gegenkupplung 10' gefahren und schließen den Kontakt zwischen den entsprechenden Kontaktträgern der beiden Elektrokontaktkupplungen mit Hilfe von Schleif- oder Gleitkontakten.

Im ungekuppelten Zustand wird die in der Gehäusestirnfläche A des Kupplungsgehäuses 11 der Elektrokontaktkupplung 10 vorgesehene frontseitige Gehäuseöffnung 23 bzw. 33 mit Hilfe einer mechanischen Klappe, einem Bürstenvorhang oder einer flexiblen Dichtung verschlossen, um ein Berühren der strom- und datenführenden Kontakte mit anderen Gegenständen oder Lebewesen und/oder eine Kontamination mit Kontaminanten zu vermeiden.

Im gekuppelten Zustand wird die Elektrokontaktkupplung umlaufend mit einer oder mehreren Dichtungen abgedichtet, so dass auch bei Relativbewegungen der mechanischen Kupplung die Dichtheit gewährleistet ist. Nach dem mechanischen Kuppeln fährt die Elektrokontaktkupplung in die Gegenkupplung. In der Gegenkupplung befindet sich eine Kontaktleiste in Gestalt eines Kontaktträgers, der mit Schleif- oder Gleitkontakten bestückt ist. Der Kontaktierungsträger 40 mit den Kontaktzungen 42 der Elektrokontaktkupplung fährt in die Gegenkupplung ein, bis die Schleif- oder Gleitkontakte der Gegenkupplung den elektrischen Kontakt mit den Kontaktzungen des Kontaktierungsträgers 40 schließen.

Die Elektrokontaktkupplung 10 kann von der mechanischen Kupplung bzw. dem mechanischen Kupplungskopf 70 mechanisch über Dämpfungs-/Federelemente entkoppelt werden. Grund dafür sind Relativbewegungen der mechanischen Kupplung, die gegebenenfalls nicht auf die Elektrokontaktkupplung übertragen werden sollen. Um Relativbewegungen von der Elektrokontaktkupplung 10 zu der mechanischen Kupplung bzw. dem mechanischen Kupplungskopf 70 auszugleichen, kann der Kontaktierungsträger 40 der Elektrokontaktkupplung 10 auch so ausgebildet sein, dass der Kontaktierungsträger 40 die notwendigen Relativbewegungen mitmachen kann.

Andererseits kann die Elektrokontaktkupplung 10 auch mittels einer federnden oder schwimmenden Lagerung mit dem mechanischen Kupplungskopf 70 verbunden sein. Insbesondere ermöglicht eine derartige Lagerung der Elektrokontaktkupplung 10, dass Bewegungen des mechanischen Kupplungskopfs 70, insbesondere Schwingbewegungen, nicht auf die Elektrokontaktkupplung 10 übertragen werden. Hierdurch kann verhindert werden, dass die Elektrokontaktkupplung 10 einem weiteren Verschleiß ausgesetzt ist. Auch wird sichergestellt, dass die Elektrokontaktkupplung 10 mit einer vorzugsweise baugleichen zu der Elektrokontaktkupplung 10 ausgeführten Gegenkupplung 10' sicher koppeln kann, und bei einer solchen Kopplung die Elemente der Kupplungen keinem erhöhten Verschleiß ausgesetzt sind.

Der Kontaktierungsträger 40 weist die Kontaktzungen 42 auf, und zwar entweder auf der Ober- oder der Unterseite. Der Grundkörper 41 des plattenförmigen Kontaktierungsträgers 40 besteht aus einem elektrischen Isolationsmaterial. Der Mittenbereich der Kontaktzungen 42 kann in dem Isolationsmaterial des Grundkörpers 41 vollständig eingebettet sein, so dass nur im Bereich der Schleif- oder Gleitkontakte die Zungenkontakte hervortreten. Denkbar hierbei ist es auch, dass die Kontaktzungen 42 in deren mittleren Bereich dünner ausgestaltet sind, um einen übermäßigen Verschleiß der Gleitkontakte beim elektrischen Kuppeln zu reduzieren.

Besonders bevorzugt ist vorgesehen, dass die Elektrokontaktkupplung 10 insgesamt modular aufgebaut ist, so dass die Kontaktträger, der plattenförmige Kontaktierungsträger sowie weitere Bauteile beim Abnehmen des Kupplungsgehäusedeckels schnell ausgetauscht werden können.

Die Elektrokontaktkupplung 10 gemäß der vorliegenden Erfindung kann seitlich und /oder ober-/unterhalb eines mechanischen Kupplungskopfes 70 angebracht werden.

### Bezugszeichenliste

- 10: Elektrokontaktkupplung
- 10': Gegenkupplung
- 11: Kupplungsgehäuse
- 12: Kupplungsgehäuse Deckel
- 13: (obere) Gehäuseöffnung
- 14: Führungsschienen
- 20: erster Kontaktträger
- 21: Trägersubstrat
- 22: elektrischer Kontakt
- 23: frontseitige Gehäuseöffnung
- 30: zweiter Kontaktträger
- 31: Trägersubstrat
- 32: elektrischer Kontakt
- 33: frontseitige Gehäuseöffnung
- 40: plattenförmiger Kontaktierungsträger
- 41: Grundkörper des Kontaktierungsträgers
- 42: Kontaktzungen des Kontaktierungsträgers
- 42.1: Schlitze für Kontaktzungen
- 42.2: federnde Elemente
- 42a: hinterer Endbereich der Kontaktzungen
- 42b: vorderer Endbereich der Kontaktzungen
- 50: Linearantrieb
- 55: Signalübertragungsterminal
- 60: Dichtungsanordnung
- 65: Zentrierdorn
- 66: Zentrierhülse
- 70: mechanischer Kupplungskopf
- 71: Kupplungskopfgehäuse
- 72: Stirnplatte
- 73: Schrauben
- 74: Kegel
- 75: Trichter
- 76: Greifer
- 100: Elektrokontaktkupplung (Stand der Technik)
- 101: Kupplungsgehäuse (Stand der Technik)
- 102: Kontaktträger (Stand der Technik)
- 103: Stiftkontakte (Stand der Technik)
- 104: Klappe (Stand der Technik)
- 105: Führung (Stand der Technik)
- 106: Zentrierelement (Stand der Technik)
- S: Vertikale Spiegelachse
- A: Gehäusestirnfläche der Elektrokontaktkupplung
- K: gemeinsame Kuppelebene
- L: Längsrichtung des Kontaktierungsträgers

## Patentansprüche

1. Elektrokontaktkupplung (10) für ein spurgeführtes Fahrzeug, insbesondere Schienenfahrzeug, wobei die Elektrokontaktkupplung (10) folgendes aufweist:
- ein Kupplungsgehäuse (11) mit mindestens einer stirnseitigen Gehäuseöffnung (23, 33);
- einen in dem Kupplungsgehäuse (11) angeordneten ersten Kontaktträger (20) mit mindestens einem und vorzugsweise einer Vielzahl von insbesondere nebeneinander angeordneten elektrischen Kontakten (22); und
- einen vorzugsweise plattenförmigen Kontaktierungsträger (40) mit mindestens einer und vorzugsweise einer Vielzahl von insbesondere nebeneinander ausgebildeter und sich in Längsrichtung (L) des Kontaktierungsträgers (40) erstreckenden Kontaktzungen (42),
wobei der Kontaktierungsträger (40) relativ zu dem Kupplungsgehäuse (11) in Längsrichtung des Kupplungsgehäuses (11) von einer ersten Position, in welcher der Kontaktierungsträger (40) mit der mindestens einen Kontaktzunge (42) vollständig in dem Kupplungsgehäuse (11) aufgenommen ist, in eine zweite Position und umgekehrt verschiebbar ist, **dadurch gekennzeichnet, dass**
in der zweiten Position zumindest der stirnseitige Endbereich des Kontaktierungsträgers (40) aus der mindestens einen stirnseitigen Gehäuseöffnung (23, 33) des Kupplungsgehäuses (11) heraussteht zum Ausbilden eines elektrischen Kontakts zwischen der mindestens einen Kontaktzunge (42) und mindestens einem elektrischen Kontakt einer vorzugsweise baugleich zu der Elektrokontaktkupplung (10) ausgeführten Gegenkupplung (10').

2. Elektrokontaktkupplung (10) nach Anspruch 1,
wobei der erste Kontaktträger (20) als aufnehmendes Teil ausgeführt und ausgebildet ist, zumindest den stirnseitigen Endbereich eines Kontaktierungsträgers (40) einer vorzugsweise baugleich zur Elektrokontaktkupplung (10) ausgeführten Gegenkupplung (10') aufzunehmen, wenn die Elektrokontaktkupplung (10) mit der Gegenkupplung (10') verbunden ist und sich der Kontaktierungsträger (40') der Gegenkupplung (10') in seiner zweiten Position befindet.

3. Elektrokontaktkupplung (10) nach Anspruch 1 oder 2,
wobei der erste Kontaktträger (20) vorzugsweise lös- und austauschbar mit dem Gehäuse der Elektrokontaktkupplung (10) fest verbunden ist, und wobei der mindestens eine elektrische Kontakt (22) des ersten Kontaktträgers (20) als elektrischer Gleit- oder Schleifkontakt ausgebildet ist, an dem eine elektrische Daten- oder Signalleitung der Elektrokontaktkupplung (10) anschließbar ist.

4. Elektrokontaktkupplung (10) nach einem der Ansprüche 1 bis 3,
wobei die Elektrokontaktkupplung (10) ferner einen zweiten in dem Kupplungsgehäuse (11) angeordneten Kontaktträger (30) mit mindestens einem und vorzugsweise einer Vielzahl von insbesondere nebeneinander angeordneten elektrischen Kontakten (32) aufweist, wobei der mindestens eine elektrische Kontakt (32) des zweiten Kontaktträgers (30) mit einem Endbereich (42a) der mindestens einen Kontaktzunge (42) verbunden ist.

5. Elektrokontaktkupplung (10) nach einem der Ansprüche 1 bis 3,
wobei die Elektrokontaktkupplung (10) ferner einen zweiten in dem Kupplungsgehäuse (11) angeordneten Kontaktträger (30) mit mindestens einem und vorzugsweise einer Vielzahl von insbesondere nebeneinander angeordneten elektrischen Kontakten (32) aufweist, wobei der Kontaktierungsträger (40) ausgebildet ist zum elektrischen Durchkontaktieren des mindestens einen elektrischen Kontakts (32) des zweiten Kontaktträgers (30) mit mindestens einem elektrischen Kontakt (22') einer vorzugsweise baugleich zur Elektrokontaktkupplung (10) ausgebildeten Gegenkupplung (10').

6. Elektrokontaktkupplung (10) nach Anspruch 5,
wobei der erste und zweite Kontaktträger (20, 30) symmetrisch zu einer senkrechten Spiegelachse (S) der Gehäusestirnfläche (A) der Elektrokontaktkupplung (10) angeordnet sind; und/oder
wobei der zweite Kontaktträger (30) dem Kontaktierungsträger (40) der Elektrokontaktkupplung (10) zugeordnet und als Führung ausgebildet ist zum Führen des Kontaktierungsträgers (40) bei einer Bewegung relativ zu dem Gehäuse (11) der Elektrokontaktkupplung (10); und/oder wobei der zweite Kontaktträger (30) vorzugsweise lös- und austauschbar mit dem Gehäuse (11) der Elektrokontaktkupplung (10) fest verbunden ist, und wobei der mindestens eine elektrische Kontakt (32) des zweiten Kontaktträgers (30) als elektrischer Gleit- oder Schleifkontakt ausgebildet ist, an dem eine elektrische Daten- oder Signalleitung der Elektrokontaktkupplung (10) anschließbar ist.

7. Elektrokontaktkupplung (10) nach einem der Ansprüche 1 bis 6, wobei mindestens eine Dichtungsanordnung (60) vorgesehen ist zum Verschließen der in dem Kupplungsgehäuse (11) vorgesehenen mindestens einen stirnseitigen Gehäuseöffnung (23, 33), insbesondere in der ersten Position des Kontaktierungsträgers (40), wobei die Dichtungsanordnung (60) vorzugsweise eine Lamellendichtung, Druckdichtung, Bürstendichtung und/oder mechanische Klappe aufweist.

8. Elektrokontaktkupplung (10) nach einem der Ansprüche 1 bis 7, wobei der Kontaktierungsträger (40) aus einem elektrisch nicht leitendem Isoliermaterial gebildet ist, und wobei die mindestens eine sich in Längsrichtung des Kontaktierungsträgers (40) erstreckende Kontaktzunge (42) derart in dem Isoliermaterial aufgenommen ist, dass vorzugsweise nur die beidseitigen Endbereiche der mindestens einen Kontaktzunge (42) zumindest teilweise freiliegen und entsprechende elektrische Kontaktbereiche bilden.

9. Elektrokontaktkupplung (10) nach einem der Ansprüche 1 bis 8,
wobei die Elektrokontaktkupplung (10) ferner einen vorzugsweise in dem Gehäuse der Elektrokontaktkupplung (10) angeordneten, insbesondere pneumatisch, elektrisch oder hydraulisch betätigten Antrieb (50), insbesondere Linearantrieb, aufweist zum bedarfsweisen Verschieben des Kontaktierungsträgers (40) relativ zu dem Gehäuse (11) der Elektrokontaktkupplung (10); und/oder
wobei die Elektrokontaktkupplung (10) ferner mindestens ein optisches und/oder elektromagnetisches Signalübertragungsterminal (55) aufweist, welches auf der senkrechten Spiegelachse (S) der Gehäusestirnfläche (A) der Elektrokontaktkupplung (10) angeordnet ist oder welches versetzt zur senkrechten Spiegelachse (S) an der Gehäusestirnfläche (A) der Elektrokontaktkupplung (10) angeordnet ist; und/oder
wobei die Elektrokontaktkupplung (10) mindestens ein Zentrierorgan (65, 66) aufweist zum selbstständigen Zentrieren der Elektrokontaktkupplung (10) beim Annähern an eine vorzugsweise baugleich zur Elektrokontaktkupplung (10) ausgeführten Gegenkupplung (10').

10. Elektrokontaktkupplung (10) nach einem der Ansprüche 1 bis 9,
wobei der Kontaktierungsträger (40) zumindest in einem Bereich, der entgegengesetzt zum stirnseitigen Bereich des Kontaktierungsträgers (40) ist, als flexible Leiterplatte ausgebildet ist.

11. Elektrokontaktkupplung (10) nach einem der Ansprüche 1 bis 10,
wobei in der ersten Position des Kontaktierungsträgers (40) die Kontaktzungen (42) im stirnseitigen Bereich des Kontaktierungsträgers (40) die elektrischen Kontakte (32) nicht berühren.

12. Elektrokontaktkupplung (10) nach einem der Ansprüche 1 bis 11,
wobei zumindest die Kontaktzungen (42) im stirnseitigen Endbereich des Kontaktträgers (40), vorzugsweise auch die Kontaktzungen (42) im gegenüber dem stirnseitigen Endbereich liegende Bereich des Kontaktträgers (40), als federnde Elemente ausgebildet sind, um einen Gleit- oder Schleifkontakt zu mindestens einem elektrischen Kontakt einer vorzugsweise baugleich zu der Elektrokontaktkupplung (10) ausgeführten Gegenkupplung (10') und/oder Kontakten (32) zu ermöglichen.

13. Kupplungskopf (70) für ein spurgeführtes Fahrzeug, insbesondere Kupplungskopf einer automatischen Mittelpufferkupplung, wobei der Kupplungskopf (70) folgendes aufweist:
- ein Kupplungskopfgehäuse (71);
- eine das Kupplungskopfgehäuse (71) stirnseitig abschließende Stirnplatte (72); und
- mindestens eine Elektrokontaktkupplung (10) nach einem der Ansprüche 1 bis 12,
wobei das Kupplungsgehäuse (11) der mindestens einen Elektrokontaktkupplung (10) vorzugsweise derart mit dem Kupplungskopfgehäuse (71) des Kupplungskopfes (70) fest verbunden ist, dass die Stirnfläche (A) des Kupplungsgehäuses (11) in oder in unmittelbarer Nähe der vertikalen Kuppelebene (K) des Kupplungskopfes (70) liegt.

14. Kupplungskopf (70) nach Anspruch 13,
wobei die Stirnplatte (72) des Kupplungskopfgehäuses (71) zumindest bereichsweise über der Stirnseite des Kupplungskopfgehäuses (71) hervorsteht und eine Stirnplatte für die mindestens eine an dem Kupplungsgehäuse (11) befestigte Elektrokontaktkupplung (10) bildet, wobei die Stirnplatte (72) des Kupplungskopfgehäuses (71) in dem über die Stirnseite des Kupplungskopfgehäuses (71) hervorstehende Bereich mindestens eine spaltförmige Öffnung aufweist, durch welche sich der Kontaktierungsträger (40) der mindestens einen an dem Kupplungskopfgehäuse befestigten Elektrokontaktkupplung (10) zumindest bereichsweise erstrecken kann.

15. Kupplungskopf (70) nach Anspruch 13 oder 14,
wobei die mindestens eine Elektrokontaktkupplung (10) derart mit dem Kupplungskopfgehäuse (71) des Kupplungskopfs (70) verbunden ist, dass die Elektrokontaktkupplung (10) bezüglich des Kupplungskopfgehäuses (71) und des Kupplungskopfs (70) federnd oder schwimmend gelagert ist.

## Claims

1. An electrical contact coupling (10) for a track-borne vehicle, particularly a railway vehicle, wherein the electrical contact coupling (10) comprises the following:
- a coupling housing (11) having at least one frontal housing opening (23, 33);
- a first contact holder (20) arranged in said coupling housing (11) having at least one and preferably a plurality of particularly adjacently arranged electrical contacts (22); and
- a preferably plate-shaped contacting support (40) having at least one and preferably a plurality of particularly adjacently formed contact tabs (42) extending in the longitudinal direction (L) of said contacting support (40),
wherein the contacting support (40) is displaceable in the longitudinal direction of the coupling housing (11) relative to said coupling housing (11) from a first position, in which the contacting support (40) with the at least one contact tab (42) is completely accommodated within the coupling housing (11), into a second position and vice versa,
**characterized in that**
at least the front end region of the contacting support (40) protrudes from the at least one frontal housing opening (23, 33) of the coupling housing (11) in the second position to form an electrical contact between the at least one contact tab (42) and at least one electrical contact of a mating coupling (10') of preferably structurally identical design to electrical contact coupling (10).

2. The electrical contact coupling (10) according to claim 1,
wherein the first contact holder (20) is configured as a receiving member and is designed to receive at least the front end region of a contacting support (40) of a preferably structurally identical mating coupling (10') to electrical contact coupling (10) when the electrical contact coupling (10) is coupled to the mating coupling (10') and the contacting support (40') of the mating coupling (10') is in its second position.

3. The electrical contact coupling (10) according to claim 1 or 2,
wherein the first contact holder (20) is preferably detachably and replaceably securely connected to the housing of the electrical contact coupling (10), and wherein the at least one electrical contact (22) of the first contact holder (20) is designed as an electrical sliding or slide contact to which an electrical data or signal line of the electrical contact coupling (10) can be connected.

4. The electrical contact coupling (10) according to one of claims 1 to 3,
wherein the electrical contact coupling (10) further comprises a second contact holder (30) arranged in the coupling housing (11) having at least one and preferably a plurality of particularly adjacently arranged electrical contacts (32), wherein the at least one electrical contact (32) of the second contact holder (30) is connected to the end region (42a) of the at least one contact tab (42).

5. The electrical contact coupling (10) according to one of claims 1 to 3,
wherein the electrical contact coupling (10) further comprises a second contact holder (30) arranged in the coupling housing (11) having at least one and preferably a plurality of particularly adjacently arranged electrical contacts (32), wherein the contacting support (40) is designed to electrically interconnect the at least one electrical contact (32) of the second contact holder (30) to at least one electrical contact (22') of a mating coupling (10') of preferably identical structural design to electrical contact coupling (10).

6. The electrical contact coupling (10) according to claim 5,
wherein the first and second contact holder (20, 30) are in a symmetrical arrangement to a vertical axis of reflection (S) of the housing frontal area (A) of the electrical contact coupling (10); and/or
wherein the second contact holder (30) is allocated to the contacting support (40) of the electrical contact coupling (10) and designed as a guide for guiding the contacting support (40) in movement relative to the housing (11) of the electrical contact coupling (10); and/or
wherein the second contact holder (30) is preferably detachably and replaceably securely connected to the housing (11) of the electrical contact coupling (10), and wherein the at least one electrical contact (32) of the second contact holder (30) is designed as an electrical sliding or slide contact to which an electrical data or signal line of the electrical contact coupling (10) can be connected.

7. The electrical contact coupling (10) according to any one of claims 1 to 6, wherein at least one sealing arrangement (60) is provided to seal the at least one frontal housing opening (23, 33) provided in the coupling housing (11) particularly in the first position of the contacting support (40), wherein said sealing arrangement (60) is preferably a leaf seal, pressure seal, brush seal and/or a mechanical flap.

8. The electrical contact coupling (10) according to any one of claims 1 to 7, wherein the contacting support (40) is formed from an electrically nonconductive insulating material, and wherein the at least one contact tab (42) extending in the longitudinal direction of the contacting support (40) is accommodated in the insulating material such that preferably only the two end regions of the at least one contact tab (42) are at least partly exposed and form corresponding electrical contact areas.

9. The electrical contact coupling (10) according to any one of claims 1 to 8, wherein the electrical contact coupling (10) further comprises a drive (50), particularly a linear drive, in particular a pneumatically, electrically or hydraulically operated drive (50) preferably accommodated in the housing of the electrical contact coupling (10) for displacing the contacting support (40) relative to the housing (11) of the electrical contact coupling (10) as needed; and/or
wherein the electrical contact coupling (10) further comprises at least one optical and/or electromagnetic signal transmission terminal (55) arranged on the vertical axis of reflection (S) of housing frontal area (A) of the electrical contact coupling (10) or arranged at the housing frontal area (A) of the electrical contact coupling (10) at an offset to the vertical axis of reflection (S); and/or
wherein the electrical contact coupling (10) comprises at least one centering element (65, 66) for the self-centering of the electrical contact coupling (10) when nearing a mating coupling (10') of preferably identical structural design to electrical contact coupling (10).

10. The electrical contact coupling (10) according to any one of claims 1 to 9,
wherein the contacting support (40) is designed as a flexible circuit board in at least one area opposite from the front end region of the contacting support (40).

11. The electrical contact coupling (10) according to any one of claims 1 to 10,
wherein the contact tabs (42) in the front end region of the contacting support (40) do not contact the electrical contacts (32) in the first position of the contacting support (40).

12. The electrical contact coupling (10) according to any one of claims 1 to 11,
wherein at least the contact tabs (42) in the front end region of the contacting support (40), preferably also the contact tabs (42) in the area of the contacting support (40) opposite from the front end region, are designed as elastic elements to allow sliding or slide contact with at least one electrical contact of a mating coupling (10') of preferably identical structure to the electrical contact coupling (10) and/or contacts (32).

13. A coupler head (70) for a track-borne vehicle, particularly a coupler head of an automatic central buffer coupling, wherein the coupler head (70) comprises the following:
- a coupler head housing (71);
- a face plate (72) terminating the front end of the coupler head housing (71); and
- at least one electrical contact coupling (10) according to any one of claims 1 to 12,
wherein the coupling housing (11) of the at least one electrical contact coupling (10) is preferably fixedly connected to the coupler head housing (71) of the coupler head (70) such that the frontal area (A) of the coupling housing (11) is in the proximity or in the direct proximity of the vertical coupling plane (K) of the coupler head (70).

14. The coupler head (70) according to claim 13,
wherein at least part of the face plate (72) of the coupler head housing (71) protrudes over the frontal area of the coupler head housing (71) and forms a face plate for the at least one electrical contact coupling (10) affixed to the coupling housing (11), wherein the face plate (72) of the coupler head housing (71) comprises at least one slot-like opening in the area protruding over the front end of the coupler head housing (71) through which at least part of the contacting support (40) of the at least one electrical contact coupling (10) affixed to the coupler head housing can extend.

15. The coupler head (70) according to claim 13 or 14,
wherein the at least one electrical contact coupling (10) is connected to the coupler head housing (71) of the coupler head (70) such that the electrical contact coupling (10) is spring-mounted or suspended relative to the coupler head housing (71) and the coupler head (70).

## Revendications

1. Coupleur à contacts électriques (10) pour un véhicule guidé sur rail, en particulier pour un véhicule ferroviaire, le coupleur à contacts électriques (10) comprenant ce qui suit :
- un boîtier (11) pourvu d'au moins une ouverture (23, 33) côté frontal ;
- un premier support de contact (20) agencé dans le boîtier (11) et comprenant au moins un et de préférence une multitude de contacts électriques (22) agencés en particulier les uns à côté des autres ; et
- un support de mise en contact (40) de préférence en forme de plaque, comportant au moins une et de préférence une multitude de languettes de contact (42) réalisées en particulier les unes à côté des autres et s'étendant en direction longitudinale (L) du support de mise en contact (40),
dans lequel
le support de mise en contact (40) est mobile en translation par rapport au boîtier (11) en direction longitudinale du boîtier (11) depuis une première position dans laquelle le support de mise en contact (40) pourvu de ladite au moins une languette de contact (42) est reçu complètement dans le boîtier (11), jusque dans une seconde position, et inversement,
**caractérisé en ce que**
dans la seconde position, au moins la zone d'extrémité côté frontal du support de mise en contact (40) fait saillie hors de ladite au moins une ouverture (23, 33) côté frontal du boîtier (11), afin d'établir un contact électrique entre ladite au moins une languette de contact (42) et au moins un contact électrique d'un coupleur antagoniste (10') de préférence de configuration identique à celle du coupleur à contacts électriques (10).

2. Coupleur à contacts électriques (10) selon la revendication 1,
dans lequel
le premier support de contact (20) est conçu sous forme d'élément de réception et est réalisé pour recevoir au moins la zone d'extrémité frontale d'un support de mise en contact (40) d'un coupleur antagoniste (10') de préférence de configuration identique à celle du coupleur à contacts électriques (10), lorsque le coupleur à contacts électriques (10) est relié au coupleur antagoniste (10') et que le support de mise en contact (40') du coupleur antagoniste (10') se trouve dans sa seconde position.

3. Coupleur à contacts électriques (10) selon la revendication 1 ou 2,
dans lequel
le premier support de contact (20) est fermement relié au boîtier du coupleur à contacts électriques (10) de préférence de façon amovible et interchangeable, et
ledit au moins un contact électrique (22) du premier support de contact (20) est réalisé sous forme de contact électrique glissant ou frottant auquel peut se connecter une ligne électrique de données ou de signaux du coupleur à contacts électriques (10).

4. Coupleur à contacts électriques (10) selon l'une des revendications 1 à 3,
dans lequel
le coupleur à contacts électriques (10) comprend en outre un second support de contact (30) agencé dans le boîtier (11) et comprenant au moins un et de préférence une multitude de contacts électriques (32) agencés en particulier les uns à côté des autres, ledit au moins un contact électrique (32) du second support de contact (30) étant raccordé à une zone d'extrémité (42a) de ladite au moins une languette de contact (42).

5. Coupleur à contacts électriques (10) selon l'une des revendications 1 à 3,
dans lequel
le coupleur à contacts électriques (10) comprend en outre un second support de contact (30) agencé dans le boîtier (11) et comprenant au moins un et de préférence une multitude de contacts électriques (32) agencés en particulier les uns à côté des autres, le support de mise en contact (40) étant réalisé pour la mise en contact électrique dudit au moins un contact électrique (32) du second support de contact (30) avec au moins un contact électrique (22') d'un coupleur antagoniste (10') de préférence de configuration identique à celle du coupleur à contacts électriques (10).

6. Coupleur à contacts électriques (10) selon la revendication 5,
dans lequel
le premier et le second support de contact (20, 30) sont agencés à symétrie par rapport à un axe de symétrie (S) vertical de la surface frontale (A) du boîtier du coupleur à contacts électriques (10) ; et/ou le second support de contact (30) est associé au support de mise en contact (40) du coupleur à contacts électriques (10) et est réalisé sous forme de guidage pour guider le support de mise en contact (40) lors d'un mouvement par rapport au boîtier (11) du coupleur à contacts électriques (10) ; et/ou
le second support de contact (30) est fermement relié au boîtier (11) du coupleur à contacts électriques (10) de préférence de façon amovible et interchangeable, et
ledit au moins un contact électrique (32) du second support de contact (30) est réalisé sous forme de contact électrique glissant ou frottant auquel peut se connecter une ligne électrique de données ou de signaux du coupleur à contacts électriques (10).

7. Coupleur à contacts électriques (10) selon l'une des revendications 1 à 6,
dans lequel
il est prévu au moins un ensemble d'étanchéité (60) pour obturer ladite au moins une ouverture (23, 33) côté frontal prévue dans le boîtier (11), en particulier dans la première position du support de mise en contact (40), l'ensemble d'étanchéité (60) comprenant de préférence un joint à lamelles, un joint d'étanchéité à la pression, un joint à brosse et/ou un volet mécanique.

8. Coupleur à contacts électriques (10) selon l'une des revendications 1 à 7,
dans lequel
le support de mise en contact (40) est réalisé en un matériau d'isolation électriquement non conducteur, et
ladite au moins une languette de contact (42) s'étendant en direction longitudinale du support de mise en contact (40) est reçue dans le matériau d'isolation de telle sorte que de préférence uniquement les zones d'extrémité bilatérales de ladite au moins une languette de contact (42) sont au moins partiellement à découvert et constituent des zones de contact électriques correspondantes.

9. Coupleur à contacts électriques (10) selon l'une des revendications 1 à 8,
dans lequel
le coupleur à contacts électriques (10) comprend en outre un entraînement (50), en particulier à actionnement pneumatique, électrique ou hydraulique, agencé de préférence dans le boîtier du coupleur à contacts électriques (10), en particulier un entraînement linéaire pour déplacer au besoin le support de mise en contact (40) par rapport au boîtier (11) du coupleur à contacts électriques (10) ; et/ou
le coupleur à contacts électriques (10) comprend en outre au moins un terminal de transmission de signaux (55) optique et/ou électromagnétique qui est agencé sur l'axe de symétrie (S) vertical de la surface frontale (A) du boîtier du coupleur à contacts électriques (10) ou qui est agencé en décalage par rapport à l'axe de symétrie (S) vertical sur la surface frontale (A) du boîtier du coupleur à contacts électriques (10) ; et/ou le coupleur à contacts électriques (10) comprend au moins un organe de centrage (65, 66) pour le centrage automatique du coupleur à contacts électriques (10) lors de l'approche vers un coupleur antagoniste (10') de préférence de configuration identique à celle du coupleur à contacts électriques (10).

10. Coupleur à contacts électriques (10) selon l'une des revendications 1 à 9,
dans lequel
le support de mise en contact (40) est réalisé sous forme de carte à circuits imprimés flexible au moins dans une zone qui est opposée à la zone frontale du support de mise en contact (40).

11. Coupleur à contacts électriques (10) selon l'une des revendications 1 à 10,
dans lequel
dans la première position du support de mise en contact (40), les languettes de contact (42) dans la zone frontale du support de mise en contact (40) ne touchent pas les contacts électriques (32).

12. Coupleur à contacts électriques (10) selon l'une des revendications 1 à 11,
dans lequel
au moins les languettes de contact (42) dans la zone d'extrémité frontale du support de mise en contact (40), de préférence également les languettes de contact (42) dans la zone du support de contact (40) située à l'opposé de la zone d'extrémité frontale sont réalisées sous forme d'éléments élastiques pour permettre un contact glissant ou frottant vers au moins un contact électrique d'un coupleur antagoniste (10') de préférence de configuration identique à celle du coupleur à contacts électriques (10) et/ou vers les contacts (32).

13. Tête de coupleur (70) pour un véhicule guidé sur rails, en particulier tête de coupleur d'un attelage automatique à tampon central, la tête de coupleur (70) comprenant ce qui suit :
- un boîtier (71) de tête de coupleur ;
- une plaque frontale (72) refermant du côté frontal le boîtier (71) de tête de coupleur ; et
- au moins un coupleur à contacts électriques (10) selon l'une des revendications 1 à 12,
dans laquelle
le boîtier (11) dudit au moins un coupleur à contacts électriques (10) est fermement relié au boîtier (71) de la tête de coupleur (70) de préférence de telle sorte que la surface frontale (A) du boîtier (11) du coupleur se situe dans ou à proximité directe du plan d'accouplement vertical (K) de la tête de coupleur (70).

14. Tête de coupleur (70) selon la revendication 13,
dans laquelle
la plaque frontale (72) du boîtier (71) de la tête de coupleur fait saillie au moins localement au-delà de la face frontale du boîtier (71) de la tête de coupleur et constitue une plaque frontale pour ledit au moins un coupleur à contacts électriques (10) fixé au boîtier (11), la plaque frontale (72) du boîtier (71) de la tête de coupleur présente au moins une ouverture en forme de fente dans la zone faisant saillie au-delà de la face frontale du boîtier (71) de la tête de coupleur, ouverture à travers laquelle le support de mise en contact (40) dudit au moins un coupleur à contacts électriques (10) fixé au boîtier de la tête de coupleur peut s'étendre au moins localement.

15. Tête de coupleur (70) selon la revendication 13 ou 14,
dans laquelle
ledit au moins un coupleur à contacts électriques (10) est relié au boîtier (71) de la tête de coupleur de telle sorte que le coupleur à contacts électriques (10) est monté de façon élastique ou en flottement par rapport au boîtier (71) de la tête de coupleur et par rapport à la tête de coupleur (70).
